# EUROPEAN PATENT APPLICATION

(11) **EP 4 757 356 A1**
(43) Date of publication of application: **10.06.2026**
(21) Application number: 23947068.5
(22) Date of filing: 31.07.2023
(51) Int. Cl.: H04W 4/12, H04W 24/02

(54) **INFORMATION PROCESSING METHOD, FIRST DEVICE, INTERNET OF THINGS DEVICE, COMMUNICATION SYSTEM, AND STORAGE MEDIUM**

(71) Applicant: Beijing Xiaomi Mobile Software Co., Ltd., Beijing 100085 (CN)
(72) Inventor: GUO, Shengxiang, Beijing 100085 (CN)
(74) Representative: Stöckeler, Ferdinand
(86) International application number: PCT/CN2023/110438
(87) International publication number: WO 2025/025120

(57) **Abstract**

The present disclosure relates to an information processing method, a first device, an Internet of Things device, a communication system, and a storage medium. The method comprises: a first device sending first information, wherein the first information is used for requesting an Internet of Things device to send second information; and receiving the second information, wherein the second information is used for indicating information of the Internet of Things device. Therefore, the first device can reliably acquire the information of the Internet of Things device, thereby realizing reliable reading of data information of the Internet of Things device.

## Description

### TECHNICAL FIELD

The present disclosure relates to the field of communication technologies, in particular to an information processing method, a first device, an Internet of Things device, a communication system and a storage medium.

### BACKGROUND

Ambient Internet of Things (Ambient-IoT) is a new IoT technology. For the Ambient-IoT, an obvious characteristic compared with previous IoT technologies is a large amount of Ambient-Internet of Things devices configured in a network for inventory and repository of large-scale items.

### SUMMARY

A challenge of acquiring data information of an Internet of Things device in an Internet of Things network remains to be unsolved.

Embodiments of the present disclosure provide an information processing method, a first device, an Internet of Things device, a communication system and a storage medium, to solve the challenge of acquiring the data information of the Internet of Things device.

In a first aspect, embodiments of the present disclosure provide an information processing method. The method is performed by a first device, and includes:
sending first information, in which the first information is used to request an Internet of Things device to send second information; and
receiving the second information, in which the second information indicates information of the Internet of Things device.

In a second aspect, embodiments of the present disclosure provide an information processing method. The method is performed by an Internet of Things device, and includes:
receiving first information sent by a first device, in which the first information is used to request the Internet of Things device to send second information; and
sending the second information, in which the second information indicates information of the Internet of Things device.

In a third aspect, embodiments of the present disclosure provide a first device. The first device includes: a transceiver module. The transceiver module is configured to:
send first information, in which the first information is used to request an Internet of Things device to send second information; and
receive the second information, in which the second information indicates information of the Internet of Things device.

In a fourth aspect, embodiments of the present disclosure provide an Internet of Things device. The Internet of Things device includes: a transceiver module. The transceiver module is configured to:
receive first information sent by a first device, in which the first information is used to request the Internet of Things device to send second information; and
send the second information, in which the second information indicates information of the Internet of Things device.

In a fifth aspect, embodiments of the present disclosure provide a first device. The first device includes:
one or more processors; and
a memory coupled to the one or more processors, in which the memory stores executable instructions, and when the executable instructions are executed by the one or more processors, the first device is caused to perform the information processing method described in the first aspect.

In a sixth aspect, embodiments of the present disclosure provide an Internet of Things device. The Internet of Things device includes:
one or more processors; and
a memory coupled to the one or more processors, in which the memory stores executable instructions, and when the executable instructions are executed by the one or more processors, the Internet of Things device is caused to implement the information processing method described in the second aspect.

In a seventh aspect, embodiments of the present disclosure provide a communication system. The communication system includes a first device and an Internet of Things device. The first device is configured to implement the information processing method described in the first aspect, and the Internet of Things device is configured to implement the information processing method described in the second aspect.

**In** an eighth aspect, embodiments of the present disclosure provide a storage medium. The storage medium stores instructions, and when the instructions are executed by a communication device, the communication device is caused to perform the information processing method described in the first aspect or the information processing method described in the second aspect.

By implementing the above aspects of the present disclosure, the first device may acquire the information of the Internet of Things device in a reliable way, thus realizing reliable reading of the data information of the Internet of Things device.

### BRIEF DESCRIPTION OF THE DRAWINGS

**In** order to more clearly explain the technical solutions of the embodiments of the present disclosure, the accompanying drawings required for the descriptions of the embodiments are introduced below. The following drawings are only some embodiments of the present disclosure and do not impose specific limitations on the protection scope of the present disclosure.
FIG. 1A is an example schematic diagram of a communication system provided according to an embodiment of the present disclosure.
FIG. 1B is an example schematic diagram of a communication system provided according to an embodiment of the present disclosure.
FIG. 1C is an example schematic diagram of a communication system provided according to an embodiment of the present disclosure.
FIG. 1D is an example schematic diagram of a communication system provided according to an embodiment of the present disclosure.
FIG. 1E is an example schematic diagram of a communication system provided according to an embodiment of the present disclosure.
FIG. 2 is an example interactive schematic diagram of an information processing method provided according to an embodiment of the present disclosure.
FIG. 3A is an example flowchart of an information processing method provided according to an embodiment of the present disclosure.
FIG. 3B is an example flowchart of an information processing method provided according to an embodiment of the present disclosure.
FIG. 3C is an example flowchart of an information processing method provided according to an embodiment of the present disclosure.
FIG. 3D is an example flowchart of an information processing method provided according to an embodiment of the present disclosure.
FIG. 4A is an example flowchart of an information processing method provided according to an embodiment of the present disclosure.
FIG. 4B is an example flowchart of an information processing method provided according to an embodiment of the present disclosure.
FIG. 4C is an example flowchart of an information processing method provided according to an embodiment of the present disclosure.
FIG. 4D is an example flowchart of an information processing method provided according to an embodiment of the present disclosure.
FIG. 5 is an example interactive schematic diagram of an information processing method provided according to an embodiment of the present disclosure.
FIG. 6 is an example flowchart of an information processing method provided according to an embodiment of the present disclosure.
FIG. 7A is an example structural diagram of a first device provided according to an embodiment of the present disclosure.
FIG. 7B is an example structural diagram of an Internet of Things device provided according to an embodiment of the present disclosure.
FIG. 8A is an example structural diagram of a communication device provided according to an embodiment of the present disclosure.
FIG. 8B is an example structural diagram of a communication device provided according to an embodiment of the present disclosure.

### DETAILED DESCRIPTION

Embodiments of the present disclosure provide an information processing method, a first device, an Internet of Things device, a communication system and a storage medium.

In a first aspect, embodiments of the present disclosure provide an information processing method. The method is performed by a first device, and includes:
sending first information, in which the first information is used to request an Internet of Things device to send second information; and
receiving the second information, in which the second information indicates information of the Internet of Things device.

In the above embodiments, the first device sends the first information to the Internet of Things device, which enables the Internet of Things device to send the second information to the first device, so that the first device may obtain the information of the Internet of Things device in a reliable way, thereby realizing reliable reading of the information of the Internet of Things device.

In combination with some embodiments of the first aspect, in some embodiments, the first information includes at least one of:
an Internet of Things device identifier used to identify the Internet of Things device; or
an Internet of Things device group identifier used to identify an Internet of Things device group where the Internet of Things device is located.

In the above embodiments, by sending the Internet of Things device identifier and/or the Internet of Things device group identifier, the first device may accurately send an information acquisition request to a target Internet of Things device, so as to read data information of the target Internet of Things device in a more reliable way.

In combination with some embodiments of the first aspect, in some embodiments, the Internet of Things device identifier and/or the Internet of Things device group identifier is configured by the first device for the Internet of Things device.

In the above embodiments, the first device may configure the Internet of Things device identifier and/or the Internet of Things device group identifier for the Internet of Things device in advance before acquiring the information of the Internet of Things device, which may effectively ensure that a request for reading data information of a target Internet of Things device can be reliably sent to the target Internet of Things device, which improves an accuracy of data information acquisition.

In combination with some embodiments of the first aspect, in some embodiments, the first information includes an authentication code used for the Internet of Things device to authenticate the first device; and
the second information is sent in a case that the Internet of Things device determines that the authentication is passed according to the authentication code.

In the above embodiments, the first device sends the authentication code to the Internet of Things device, so that the Internet of Things device may authenticate a transmitter of the first information based on the authentication code, which may reliably prevent an illegal device from obtaining the data information of the Internet of Things device, thereby effectively ensuring the data security.

In combination with some embodiments of the first aspect, in some embodiments, a first authentication code sent by the first device to the Internet of Things device is different from a second authentication code sent by a second device to the Internet of Things device; or
a third authentication code sent by the first device to a first Internet of Things device is different from a fourth authentication code sent by the first device to a second Internet of Things device.

In the above embodiments, different first devices may configure different authentication codes for different Internet of Things devices, which effectively improves a flexibility of configuring the authentication code and further prevents the Internet of Things device from sending its data information to an illegal device, thereby effectively improving the data security.

In combination with some embodiments of the first aspect, in some embodiments, the first information includes scheduling request information used to request the Internet of Things device to send the second information; and
the second information is sent by the Internet of Things device in response to the scheduling request information.

In the above embodiments, the scheduling request information is sent to the Internet of Things device to request the Internet of Things device to send the second information, which may effectively save signaling and improve a reliability of data interaction between the first device and the Internet of Things device.

In combination with some embodiments of the first aspect, in some embodiments, the first information includes scheduling indication information indicating a data type included in the second information; and
the second information is determined by the Internet of Things device according to the scheduling indication information.

In the above embodiments, the first device may indicate the specific data information sent by the Internet of Things device to the first device via sending the scheduling indication information, so that the Internet of Things device may only send the data required by the first device, which effectively reduces a data transmission amount, thereby saving resource overhead.

In combination with some embodiments of the first aspect, in some embodiments, the second information includes at least one of:
sensor data detected by the Internet of Things device; or
coding information of the Internet of Things device, in which the coding information includes at least one code domain.

In the above embodiments, the Internet of Things device may send the sensor data collected by its sensor via the second information, and may send part or all of the code domain of the coding information, so that the first device may effectively obtain the information, and may further control or configure the Internet of Things device based on the information.

In combination with some embodiments of the first aspect, in some embodiments, before receiving the second information, the method includes:
receiving third information, in which the third information includes at least one of:
first feedback information indicating whether the Internet of Things device allows the first device to read data information;
second feedback information used to request the first device for power supply; or
third feedback information indicating an offset of sending the second information to the first device.

In the above embodiments, the Internet of Things device may send the third information, so that the first device may obtain feedback information of the Internet of Things device for the first information, and may further determine whether to expect to receive the second information, and/or to send a charging signal, and/or to determine a time of receiving the second information, which enables the first device to reduce a monitoring power or stop monitoring when it is not required to receive the second information. This effectively reduces a power consumption of the first device, enables a more accurate reception of the second information, and improves a robustness of the communication.

In combination with some embodiments of the first aspect, in some embodiments, receiving the second information includes:
determining that a first condition is satisfied; and
receiving the second information, in which the first condition includes at least one of:
   the first device receiving the first feedback information, and the first feedback information indicating that the Internet of Things device allows the first device to read the data information;
   the first device receiving the second feedback information, and a transmission of a charging signal reaching a first duration; or
   the first device receiving the third feedback information, and a waiting time reaching the offset.

In the above embodiments, whether or not to receive the second information or when to receive the second information may be determined more accurately via one or more of the first feedback information, the second feedback information or the third feedback information, which effectively reduces a power consumption of the first device while improving a reliability of communication.

In combination with some embodiments of the first aspect, in some embodiments, the first duration is determined according to the offset, or the first duration is predefined by a protocol.

In the above embodiments, the first duration may be determined by the offset, and the first duration may also be determined based on the protocol, so that the first device may receive the second information more reliably, which improves a reliability of reading information of the Internet of Things device.

In combination with some embodiments of the first aspect, in some embodiments, the method includes:
receiving fourth information, in which the fourth information indicates a first data type, and the first data type is a data type supported by the Internet of Things device; and
determining scheduling indication information, in which a data type indicated by the scheduling indication information is at least one data type included in the first data type.

In the above embodiments, the Internet of Things device may indicate the supported data type to the first device via the fourth information, so that the first device may send the first information based on the data type supported by the Internet of Things device, which may avoid a waste of resource overhead when the first device requests to acquire a data type that is not supported by the Internet of Things device.

In combination with some embodiments of the first aspect, in some embodiments, the method includes:
receiving fourth information, in which the fourth information indicates a first data type, and the first data type is a data type supported by the Internet of Things device;
sending fifth information, in which the fifth information is used to configure a data type of the Internet of Things device as a second data type, and the second data type includes at least one data type included in the first data type; and
determining scheduling indication information, in which a data type indicated by the scheduling indication information is at least one data type included in the second data type.

In the above embodiments, the first device may know the data type the Internet of Things device supports by receiving the fourth information, and configure the data type of the Internet of Things device as the data type the Internet of Things supports via the fifth information, which may effectively ensure that the data type of the Internet of Things device is the data type the Internet of Things supports, and further improve an effectiveness of reading data information of the first device.

In combination with some embodiments of the first aspect, in some embodiments, the method includes:
sending sixth information, in which the sixth information is used to configure a data type of the Internet of Things device as a third data type; and
determining scheduling indication information, in which a data type indicated by the scheduling indication information is at least one data type included in the third data type.

In the above embodiments, the first device may configure the data type of the Internet of Things device as the data type the first device requires by sending the sixth information, so that the first device can effectively obtain its required data.

In combination with some embodiments of the first aspect, in some embodiments, the first device includes at least one of:
an access network device, a core network device, a terminal, a radio frequency read-write device, an intermediate node or an assisting node.

In the above embodiments, any device that may communicate with the Internet of Things device may reliably acquire the data of the Internet of Things device.

In combination with some embodiments of the first aspect, in some embodiments, the first information includes at least one of: an Internet of Things device identifier for identifying the Internet of Things device; an Internet of Things device group identifier for identifying an Internet of Things device group where the Internet of Things device is located; an authentication code used for the Internet of Things device to perform authentication; scheduling request information used to request the Internet of Things device to send the second information; or scheduling indication information indicating a data type included in the second information.

In combination with some embodiments of the first aspect, in some embodiments, the second information is sent when a third condition is satisfied. The third condition includes at least one of: the Internet of Things device determining that authentication is passed according to an authentication code; the Internet of Things device receiving scheduling request information; or the Internet of Things device receiving scheduling indication information, and determining the second information according to the scheduling indication information.

In a second aspect, embodiments of the present disclosure provide an information processing method. The method is performed by an Internet of Things device, and includes:
receiving first information sent by a first device, in which the first information is used to request the Internet of Things device to send second information; and
sending the second information, in which the second information indicates information of the Internet of Things device.

In combination with some embodiments of the second aspect, in some embodiments, the first information includes at least one of:
an Internet of Things device identifier used to identify the Internet of Things device; or
an Internet of Things device group identifier used to identify an Internet of Things device group where the Internet of Things device is located.

In combination with some embodiments of the second aspect, in some embodiments, the Internet of Things device identifier and/or the Internet of Things device group identifier is configured by the first device for the Internet of Things device.

In combination with some embodiments of the second aspect, in some embodiments, the first information includes an authentication code used for the Internet of Things device to authenticate the first device; and
the second information is sent in a case that the Internet of Things device determines that the authentication is passed according to the authentication code.

In combination with some embodiments of the second aspect, in some embodiments, a first authentication code received by the Internet of Things device from the first device is different from a second authentication code received by the Internet of Things device from a second device; or
the Internet of Things device is a first Internet of Things device, a third authentication code received by the first Internet of Things device from the first device is different from a fourth authentication code received by a second Internet of Things device from the first device.

In combination with some embodiments of the second aspect, in some embodiments, the first information includes scheduling request information used to request the Internet of Things device to send the second information; and
the second information is sent by the Internet of Things device in response to the scheduling request information.

In combination with some embodiments of the second aspect, in some embodiments, the first information includes scheduling indication information indicating a data type included in the second information; and
the second information is determined by the Internet of Things device according to the scheduling indication information.

In combination with some embodiments of the second aspect, in some embodiments, the second information includes at least one of:
sensor data detected by the Internet of Things device; or
coding information of the Internet of Things device, in which the coding information includes at least one code domain.

In combination with some embodiments of the second aspect, in some embodiments, before sending the second information, the method includes:
sending third information, in which the third information includes at least one of:
first feedback information indicating whether the Internet of Things device allows the first device to read data information;
second feedback information used to request the first device for power supply; or
third feedback information indicating an offset of sending the second information to the first device.

In combination with some embodiments of the second aspect, in some embodiments, sending the second information includes:
determining that a second condition is satisfied; and
sending the second information, in which the second condition includes at least one of:
   the Internet of Things device having sent the first feedback information, and the first feedback information indicating that the Internet of Things device allows the first device to read the data information;
   the Internet of Things device having sent the second feedback information; or
   the Internet of Things device having sent the third feedback information.

In combination with some embodiments of the second aspect, in some embodiments, the method includes:
sending fourth information, in which the fourth information indicates a first data type, the first data type is a data type supported by the Internet of Things device, and
the data type indicated by the scheduling indication information is at least one data type included in the first data type.

In combination with some embodiments of the second aspect, in some embodiments, the method includes:
sending fourth information, in which the fourth information indicates a first data type, and the first data type is a data type supported by the Internet of Things device; and
receiving fifth information, in which the fifth information is used to configure a data type of the Internet of Things device as a second data type, the second data type includes at least one data type included in the first data type, and
the data type indicated by the scheduling indication information is at least one data type included in the second data type.

In combination with some embodiments of the second aspect, in some embodiments, the method includes:
receiving sixth information, in which the sixth information is used to configure a data type of the Internet of Things device as a third data type, and
the data type indicated by the scheduling indication information is at least one data type included in the third data type.

In combination with some embodiments of the second aspect, in some embodiments, the first device includes at least one of:
an access network device, a core network device, a terminal, a radio frequency read-write device, an intermediate node or an assisting node.

In the third aspect, embodiments of the present disclosure provide a first device. The first device includes at least one of a transceiver module or a processing module. The first device is used to perform implementations of the first aspect.

In the fourth aspect, embodiments of the present disclosure provide an Internet of Things device. The Internet of Things device includes at least one of a transceiver module or a processing module. The Internet of Things device is used to perform implementations of the second aspect.

In the fifth aspect, embodiments of the present disclosure provide a first device. The first device includes: one or more processors and a memory coupled to the one or more processors. The memory stores executable instructions, and when the executable instructions are executed by the one or more processors, the first device is caused to perform implementations of the first aspect.

In the sixth aspect, embodiments of the present disclosure provide an Internet of Things device. The Internet of Things device includes: one or more processors and a memory coupled to the one or more processors. The memory stores executable instructions, and when the executable instructions are executed by the one or more processors, the Internet of Things device is caused to perform implementations of the second aspect.

In the seventh aspect, embodiments of the present disclosure provide a communication system. The communication system includes a first device and an Internet of Things device. The first device is configured to perform the method described in implementations of the first aspect, and the Internet of Things device is configured to perform the method described in implementations of the second aspect.

In an eighth aspect, embodiments of the present disclosure provide a storage medium. The storage medium stores instructions, and when the instructions are executed by a communication device, the communication device is caused to perform the method described in implementations of the first aspect or the method described in implementations of the second aspect.

In a ninth aspect, embodiments of the present disclosure provide a program product. When the program product is executed by a communication device, the communication device is caused to perform the method described in implementations of the first aspect or the method described in implementations of the second aspect.

In a tenth aspect, embodiments of the present disclosure provide a computer program. When the computer program is run by a computer, the computer is caused to perform the method described in implementations of the first aspect or the method described in implementations of the second aspect.

In an eleventh aspect, embodiments of the present disclosure provide a chip/chip system. The chip/chip system includes a processing circuit configured to perform the method described in implementations of the first aspect or the method described in implementations of the second aspect.

It is understood that the first device, the Internet of Things device, the communication system, the storage medium, the program product, the computer program, the chip or the chip system described above are all used to perform the methods provided by embodiments of the present disclosure. The beneficial effects they achieve may refer to the beneficial effects in the corresponding methods, which will not be repeated here.

Embodiments of the present disclosure provide an information processing method, a first device, an Internet of Things device, a communication system and a storage medium. In some embodiments, terms such as "information processing method", "information reading method", "information sending method" and "communication method" are interchangeable. Terms such as "information processing apparatus", "information reading apparatus", "information sending apparatus" and "communication apparatus" are interchangeable. Moreover, terms such as "communication system" and "information processing system" are interchangeable.

Embodiments of the present disclosure are not exhaustive, but are merely illustrative of some embodiments, and are not intended to be a specific limitation on the scope of protection of the present disclosure. In the absence of contradictions, each step in a certain embodiment may be implemented as an independent embodiment, and the steps may be arbitrarily combined, for example, a solution in which some steps are removed in a certain embodiment may also be implemented as an independent embodiment, and the order of each step in a certain embodiment may be arbitrarily exchanged, and further, implementations in a certain embodiment may be arbitrarily combined. Furthermore, various embodiments may be arbitrarily combined, for example, some or all steps of different embodiments may be arbitrarily combined, and a certain embodiment may be arbitrarily combined with implementations of other embodiments.

In respective embodiments of the present disclosure, if there is no special description and logical conflict, the terms and/or descriptions among the embodiments are consistent and may be referenced to each other, and technical features in different embodiments may be combined to form new embodiments according to their intrinsic logical relationships.

Terms used in embodiments of the present disclosure are for the purpose of describing specific embodiments only, and is not intended to limit the present disclosure.

In embodiments of the present disclosure, unless otherwise specified, elements represented in the singular form, such as "a", "an", "the", "above", "said", "preceding", "this", and the like, may represent "one and only one", or may represent "one or more", "at least one", and the like. For example, in a case where an article such as "a", "an", and "the", in English is used in translation, a noun after the article may be understood as a singular expression or a plural expression.

In embodiments of the present disclosure, "multiple" refers to two or more.

In some embodiments, terms "at least one of", "one or more", "a plurality of" and "multiple" are interchangeable.

In some embodiments, "at least one of A or B", "A and/or B", "in one case A, while in another case B", and "in response to one case A, while in response to another case B" may be used in the following technical solutions depending on the specific condition: in some embodiments, A is executed independent of B; in some embodiments, B is executed independent of A; in some embodiments, A and B are selectively executed; and in some embodiments, A and B are both executed. The same applies when there are more branches such as A, B and C.

In some embodiments, "A or B" may be used in the following technical solutions depending on the condition: in some embodiments, A is executed independent of B; in some embodiments, B is executed independent of A; and in some embodiments, A and B are selectively executed. The same applies when there are more branches such as A, B and C.

The prefix words such as "first" and "second" in embodiments of the present disclosure are only for distinguishing different description objects, and do not constitute restrictions on the position, order, priority, quantity, content, etc. of the description objects. For statements of the description objects, please refer to the description of the context in the claims or the embodiments, and should not constitute unnecessary restrictions due to the use of the prefix words. For example, if the description object is a "field", the ordinal number before the "field" in the "first field" and the "second field" does not limit the position or order between the "fields", and "first" and "second" do not limit whether the "fields" modified by them are in the same message, nor do they limit the order of the "first field" and the "second field". For another example, if the description object is "rank", the ordinal number before "rank" in "first rank" and "second rank" does not limit the priority between "ranks". For another example, the number of description objects is not limited by ordinal numbers, and may be one or more. Taking "first device" as an example, the number of "devices" may be one or more. Furthermore, objects modified by different prefixes may be the same or different, for example, if the description object is the "device", the "first device" and the "second device" may be the same device or different devices, and the types thereof may be the same or different. For another example, when the description object is "information", the "first information" and the "second information" may be the same information or different information, and the contents thereof may be the same or different.

In some embodiments, "comprising A", "containing A", "used to indicate A" and "carrying A" may be interpreted as "directly carrying A" or "indirectly indicating A".

In some embodiments, terms "in response to", "in response to determining", "in the case of", "when", "while", "if" and "assuming that" are interchangeable.

In some embodiments, terms "greater than", "greater than or equal to", "more than" "more than or equal to", "higher than", "higher than or equal to", "no less than", "no lower than" and "above" are interchangeable. Moreover, the terms "less than", "less than or equal to", "lower than", "lower than or equal to", "smaller than", "smaller than or equal to", "no greater than", "no higher than" and "below" are interchangeable.

In some embodiments, the apparatus and device may be interpreted as physical or virtual, and the names thereof are not limited to those described in embodiments. They may be referred to by "equipment", "device", "circuit", "network element", "node", "function", "unit", "section", "system", "network", "chip", "chip system", "entity" and "body" when appropriate.

In some embodiments, "network" may be interpreted as a device included in the network, such as an access network device, a core network device, and the like.

In some embodiments, "access network (AN) device" may be referred to as "radio AN (RAN) device", "base station (BS)", "radio BS" or "fixed station". In some embodiments, it may also understood as "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier" or "bandwidth part (BWP)".

In some embodiments, "terminal" or "terminal device" may be referred to as "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client" or "client".

In some embodiments, data and information are obtained by means comply with the laws and regulations of the host country.

In some embodiments, data and information are obtained with the consent of users.

In addition, each element, row or column in the tables of the embodiments of the present disclosure may be implemented as an independent embodiment, or any combination of elements, rows and columns may be implemented as an independent embodiment.

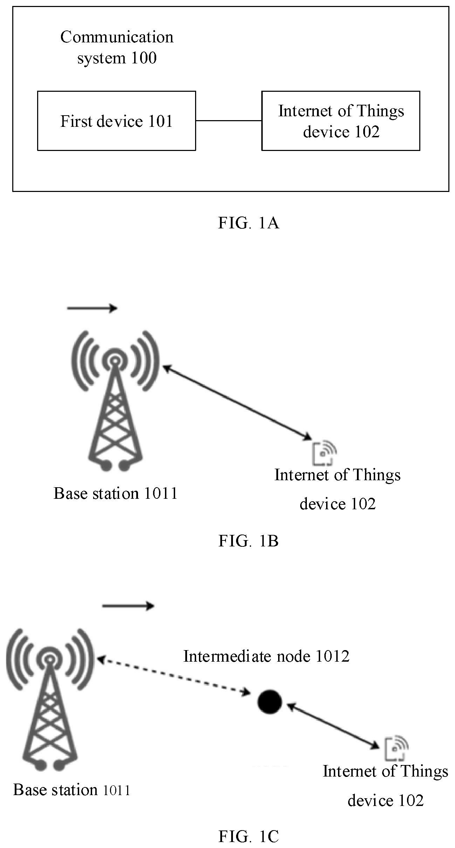

FIG. 1A is a schematic structural diagram of a communication system according to an embodiment of the present disclosure. As illustrated in FIG. 1A, the communication system 100 includes a first device 101 and an Internet of Things device 102.

In some embodiments, the Internet of Things device 102 may be an Ambient-IoT (A-IoT) device or an A-IoT terminal. In an implementation, the Ambient-IoT device may be referred to as "Ambient-IoT device", "A-IOT Tag", "A-IOT user equipment (UE)", etc., which is not limited in the embodiments of the present disclosure.

In some embodiments, an intermediate node and an assisting node may be devices in an Ambient-IoT network. In an implementation, the intermediate node and the assisting node may also be Ambient-IoT devices.

As illustrated in FIG. 1B, in some embodiments, the Internet of Things device 102 may be directly connected with a base station 1011. In this networking mode, the base station 1011 is provided as the first device 101.

As illustrated in FIG. 1C, in some embodiments, the base station 1011 is connected with an intermediate node 1012 for uplink and downlink communications, and the Internet of Things device 102 is connected with the intermediate node 1012 for uplink and downlink communications. In this networking mode, both the base station 1011 and the intermediate node 1012 may be provided as the first device 101.

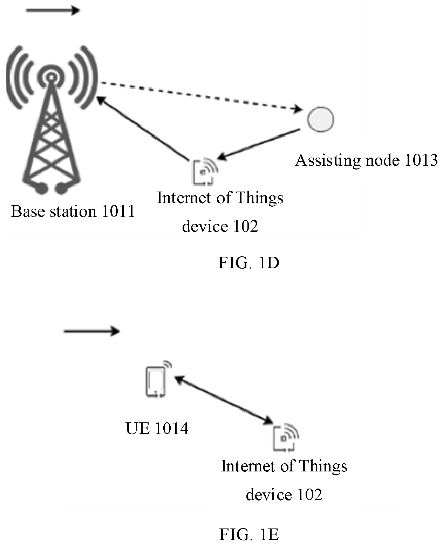

As illustrated in FIG. 1D, in some embodiments, the base station 1011 is connected with an assisting node 1013 for uplink and downlink communications, and the assisting node 1013 is also connected with the Internet of Things device 102 for uplink and downlink communications. In this networking mode, both the base station 1011 and the assisting node 1013 may be provided as the first device 101.

As illustrated in FIG. 1E, in some embodiments, a UE 1014 is connected with the Internet of Things device 102 for uplink and downlink communications. In this networking mode, the UE 1014 may be provided as the first device 101.

In an implementation, the UE 1014 may also be connected with an access network device for uplink and downlink communications.

In some embodiments of the present disclosure, the Internet of Things device 102 is an Ambient-IoT device in an Ambient-IoT network architecture. In some embodiments, there are a large amount of Ambient-IoT devices in the Ambient-IoT network for inventory and repository of large-scale items. Compared with an NB-IoT device, the Ambient-IoT device has simpler structure, lower hardware cost and maintenance cost, and the whole equipment may or may not keep a power component.

In an implementation, a device with a power supply is called an active device, and a device without a power supply is called a passive device. For the passive device, its characteristic is that it may be powered by other devices or natural conditions without manual maintenance. For the active device, a small number of energy storage components may be kept, for example a capacitor is contained, to supply energy for communication.

In some embodiments, Ambient-IoT devices can be divided into three categories: Device A having no energy storage capacity and unable to generate/amplify signals independently; Device B having energy storage capacity and unable to generate signals independently; and Device C having energy storage capacity and able to generate signals independently.

In some embodiments, the first device 101 may be any one of: an access network device, a core network device, a terminal, a radio frequency read-write device, an intermediate node or an assisting node.

In some embodiments, the radio frequency read-write device is a device capable of reading data of an Ambient-IoT device and/or writing data into an Ambient-IoT device. In an implementation, the radio frequency read-write device may be integrated by a communication device, such as a terminal, an intermediate node, an assisting node, or a network device, e.g., a base station

In some embodiments, the terminal includes at least one of a mobile phone, a wearable device, an Internet of Things device, a car with communication functions, a smart car, a Pad, a computer with wireless transceiver functions, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city or a wireless terminal in smart home, which is not limited here.

In some embodiments, the access network device may be a node or a device that connects the terminal to a wireless network. The access network device includes at least one of an evolved Node B (eNB) in a 5th generation (5G) mobile communication system, a next generation eNB (ng-eNB), a next generation NodeB (gNB), a node B (NB), a home NB (HNB), a home eNB (HeNB), a wireless backhaul equipment, a radio network controller (RNC), a BS controller (BSC), a base transceiver station (BTS), a base band unit (BBU), a mobile switching center, a BS in a 6th generation (6G) mobile communication system, an Open RAN, a Cloud RAN, a BS in other communication systems, or an access node in a wireless fidelity (Wi-Fi) system, which is not limited here.

In some embodiments, the technical solution of the present disclosure is applicable to an Open RAN architecture. In this case, interfaces between access network devices or interfaces within an access network device involved in the embodiments of the present disclosure may be used as internal interfaces of the Open RAN. The procedures and information interactions between these internal interfaces are implemented by software or programs.

In some embodiments, the access network device is composed of a central unit (CU) and distributed units (DUs), and "CU" may also be the abbreviation of control unit. The use of CU-DU structure allows to divide a protocol layer of the access network device, such that some functions of the protocol layer are placed in the CU for centralized control, and some or all of the remaining functions of the protocol layer are distributed in the DUs that are centrally controlled by the CU, which is not limited here.

In some embodiments, the core network device may be a device, including the first network element and the second network element, or a plurality of devices or groups of devices, each including the first network element and/or the second network element. The network element may be virtual or physical. The core network includes at least one of an evolved packet core (EPC), a 5G core network (CN) or a next generation core (NGC).

It may be understood that the communication system described in embodiments of the present disclosure is to more clearly explain the technical solution of embodiments of the present disclosure, and does not constitute a limitation on the technical solution provided by embodiments of the present disclosure. As those skilled in the art know, with the evolution of the system architecture and the emergence of new service scenarios, the technical solution provided by embodiments of the present disclosure is applicable to similar technical problems.

The following embodiments of the present disclosure are applicable to the entire or a portion of the communication system 100 shown in FIG. 1A, which is not limited here. The entities shown in FIG. 1A are examples. The communication system may include all or part of the entities in FIG. 1A, and may also include entities not shown in FIG. 1A. The quantities and forms of the entities are arbitrary, and the entities may be physical or virtual. The connection relationships between the entities are illustrated as examples. The entities may not be connected or not connected, and the connection may be any form, which may be direct connection or indirect connection, or wired connection or wireless connection.

Embodiments of the present disclosure may be applied to long-term evolution (LTE), LTE-Advanced (LTE-A), LTE-Beyond (LTE-B), SUPER 3G, IMT-Advanced, 4th generation (4G) mobile communication system, 5G, 5G new radio (NR), future radio access (FRA), a new-radio access technology (RAT), NR, new radio access (NX), future generation radio access (FX), global system for mobile communications (GSM (registered trademark)), CDMA2000, ultra mobile broadband (UMB), IEEE 802.11(Wi-Fi (registered trademark)), IEEE 802.16 (WiMAX (registered trademark)), IEEE 802.20, ultra-wideband (UWB), Bluetooth (registered trademark), a public land mobile network (PLMN), a Device-to-Device (D2D) system, a machine-to-machine (M2M) system, an IoT system, a Vehicle-to-Everything (V2X) system, systems using other communication methods or their next generation systems. In addition, the above systems may be combined for applications, such as a combination of the LTE/LTE-A system and 5G.

In some embodiments, the structure of the Ambient-IoT device is relatively simple, and it potentially includes various types of data information, such as data information, control information and the like. In some embodiments, data information is implemented in the form of coding information, such as Ambient-IoT coding. The Ambient-IoT coding may include a plurality of code domains, which may be configured in the same way or in different ways.

In some embodiments, there are three configuration modes for a certain code domain, i.e., static configuration, semi-static configuration and dynamic configuration.

In some embodiments, before the first device reads information of an Ambient-IoT device, an Ambient-IoT device identifier is already known. In an implementation, the Ambient-IoT device has already informed the first device of the identification information of the Ambient-IoT device, when the Ambient-IoT device accesses a network, or the identification information of the Ambient-IoT device is written, recorded or configured by the first device.

In some embodiments, situations for reading Ambient-IoT data information may include: reading data information by an access network device; reading data information by an intermediate node; reading data information by an assisting node; reading data information by a terminal; and reading data information by a radio frequency read-write device.

In order to enable the first device to read the data information of the Internet of Things device more reliably, embodiments of the present disclosure provide an information processing method, a first device, an Internet of Things device, a communication system and a storage medium involved in the following embodiments.

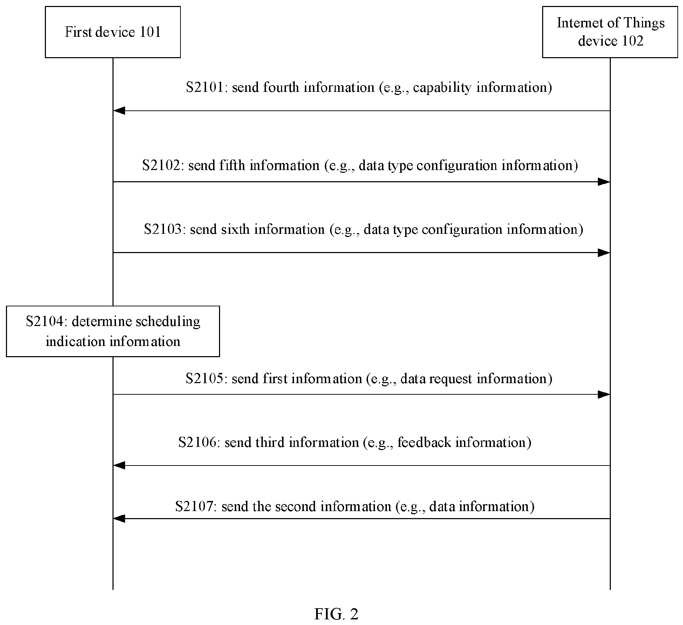

FIG. 2 is an interactive schematic diagram of an information processing method illustrated according to an embodiment of the present disclosure. As illustrated in FIG. 2, embodiments of the present disclosure are related to an information processing method. The method is applicable to a communication system, and the communication system includes the first device 101 and the Internet of Things device 102. The method includes the following steps.

At step S2101, the Internet of Things device 102 sends fourth information (e.g., capability information).

In some embodiments, the fourth information indicates a first data type. In an implementation, the first data type is a data type the Internet of Things device 102 supports. In an implementation, the first data type is a data type that the Internet of Things device 102 may read or acquire. In an implementation, the first data type may be a data type that the Internet of Things device 102 may send.

It is understood that the first data type may include a plurality of data types, and a number of data types included in the first data type is not limited in the embodiments of the present disclosure.

In some embodiments, the fourth information indicates a capability of the Internet of Things device 102. For example, the fourth information may indicate a field or a code domain of data information stored by the Internet of Things device 102.

In an implementation, the fourth information may indicate sensor data detected by a sensor of the Internet of Things device 102. For example, the fourth information indicates one or more of temperature data, humidity data, vibration intensity data, vibration duration data, light intensity data, pressure data, height data, speed data, angle data or other data that may be detected by the Internet of Things device 102. Correspondingly, the data type the Internet of Things device 102 supports may include a data type corresponding to the above sensor data.

In an implementation, the fourth information may also indicate a code domain included in the coding information of the Internet of Things device 102. For example, the fourth information may indicate that a code domain is included in the coding information of the Internet of Things device 102. In an implementation, the coding information may include a code domain corresponding to identifier (ID) information and/or a code domain corresponding to article information. In an implementation, the coding information of the Internet of Things device may include one or more of the following code domains: a codebook type; a code version number; a domain name manager; a country/region code; a domestic administrative region code; an article status type; an article status indication domain; an article type; a codebook application scenario; a cell ID; an operator code; an article serial number; and an association code.

In some embodiments, the fourth information may be referred to as "capability information", "capability reporting information", "field information" and the like, and the name of the fourth information is not limited in the embodiments of the present disclosure.

In some embodiments, the first device 101 receives the fourth information. In an implementation, the fourth information is sent by the Internet of Things device 102.

At step S2102, the first device 101 sends fifth information (e.g., data type configuration information).

In some embodiments, the fifth information is used to configure a data type of the Internet of Things device 102. In an implementation, the fifth information is used to configure the data type of the Internet of Things device 102 as a second data type. In an implementation, the second data type includes at least one data type included in the first data type. In an implementation, the fifth information is used to configure the data type of the Internet of Things device 102 to be a data type the Internet of Things device 102 supports.

For example, if the first device 101 determines that the first data type includes data types corresponding to the temperature data, the humidity data, the vibration intensity data and the vibration duration data according to the fourth information, the first device 101 may determine that the second data type corresponding to the fifth information includes one or more of the temperature data, the humidity data, the vibration intensity data and the vibration duration data.

In some embodiments, the Internet of Things device 102 receives the fifth information. In an implementation, the Internet of Things device 102 configures the data type according to the fifth information. In an implementation, the Internet of Things device 102 obtains data corresponding to the data type.

For example, after receiving the fifth information, the Internet of Things device 102 may configure its data type as the second data type corresponding to the fifth information according to the fifth information, and acquire data corresponding to the second data type. For example, if the second data type includes data types corresponding to the temperature data, the humidity data and the vibration intensity data, the Internet of Things device 102 may acquire the corresponding temperature data, the humidity data and the vibration intensity data.

In some embodiments, step S2102 is performed after the first device 101 receives the fourth information sent by the Internet of Things device 102. In an implementation, the first device 101 sends the fifth information in response to the fourth information. In an implementation, the first device 101 sends the fifth information when the fourth information is received.

In some embodiments, the fifth information may be referred to as "configuration information", "data type indication information", "data configuration indication" and the like, and the name of the fifth information is not limited in the embodiments of the present disclosure.

At step S2103, the first device 101 sends sixth information (e.g., data type configuration information).

In some embodiments, the sixth information is used to configure the data type of the Internet of Things device 102. In an implementation, the sixth information is used to configure the data type of the Internet of Things device 102 as a third data type. In an implementation, the third data type is determined by the first device 101. In an implementation, the third data type is indicated by an upper layer of the first device 101. In an implementation, the third data type is determined by the first device 101 according to a requirement of the first device. In an implementation, the third data type is pre-agreed in a protocol.

For example, if the first device 101 determines that it may need to know an article type, a codebook application scenario and a cell ID of the Internet of Things device 102, the first device 101 may configure the data type of the Internet of Things device 102 to be data types corresponding to the article type, the codebook application scenario and the cell ID via the sixth information, so that the Internet of Things device 102 may acquire the corresponding data from corresponding code domains of the coding information according to the sixth information.

In an implementation scenario, if the Internet of Things device 102 cannot acquire data corresponding to a certain data type according to the sixth information, or the third data type corresponding to the sixth information includes a data type that is not supported by the Internet of Things device 102, the Internet of Things device 102 may determine the data corresponding to the data type as preset data. For example, if the coding information of the Internet of Things device 102 does not include the code domain corresponding to the article type, the data corresponding to the article type is determined to be "0" or "none".

In some embodiments, the sixth information may be referred to as "configuration information", "data type indication information", "data configuration indication" and the like, and the name of the sixth information is not limited in the embodiments of the present disclosure.

In some embodiments, the above step S2102 and step S2103 may be performed selectively.

At step S2104, the first device 101 determines scheduling indication information.

In some embodiments, the scheduling indication information indicates a data type included in second information. In an implementation, the scheduling indication information indicates a data type requested by the first device 101. In an implementation, the scheduling indication information is used to instruct the Internet of Things device 102 to determine the data type included in the second information according to the scheduling indication information. In an implementation, the scheduling indication information is used for the Internet of Things device 102 to generate the second information. In an implementation, the data type included in the second information generated by the Internet of Things device 102 includes the data type indicated by the scheduling indication information. In an implementation, the scheduling indication information indicates specific data information requested by the first device 101 from the Internet of Things device 102.

In some embodiments, the first device 101 determines that the data type indicated by the scheduling indication information is at least one data type included in the first data type. In an implementation, the data type indicated by the scheduling indication information is at least one of data types that the Internet of Things device 102 supports.

For example, if the data type the Internet of Things device 102 supports includes data types corresponding to the temperature data, the humidity data, the vibration intensity data and the vibration duration data, the data type indicated by the scheduling indication information may include one or more of the data types corresponding to the temperature data, the humidity data, the vibration intensity data and the vibration duration data. The Internet of Things device 102 generates the second information according to the data type indicated by the scheduling indication information, and thus the second information include data corresponding to all or part of the data type indicated by the scheduling indication information.

In some embodiments, the first device 101 determines that the data type indicated by the scheduling indication information is at least one data type included in the second data type.

In some embodiments, the first device 101 determines that the data type indicated by the scheduling indication information is at least one data type included in the third data type.

In an implementation, the data type indicated by the scheduling indication information includes at least one of data types configured by the first device 101 for the Internet of Things device 102.

For example, if the data type configured by the first device 101 for the Internet of Things device 102 includes data types corresponding to the article type, the codebook application scenario and the cell ID, that is, the second data type or the third data type includes the data types corresponding to the article type, the codebook application scenario and the cell ID, then the data type indicated by the scheduling indication information includes one or more of the above data types. For example, the data type indicated by the scheduling indication information may include the data types corresponding to the codebook application scenario and the cell ID.

In some embodiments, the scheduling indication information may be referred to as "scheduling request indication", "scheduling indication", "type indication information" and the like, and the name of the scheduling indication information is not limited in the embodiments of the present disclosure.

At step S2105, the first device 101 sends first information (e.g., data request information).

In some embodiments, the first information is used to request the Internet of Things device 102 to send second information. In an implementation, the first information is used to instruct the Internet of Things device 102 to send the second information. In an implementation, the first information is used to control the Internet of Things device 102 to send the second information.

In some embodiments, the first information includes at least one of: an Internet of Things device ID or an Internet of Things device group ID. In an implementation, the Internet of Things device ID is used to identify the Internet of Things device 102. In an implementation, the Internet of Things device group ID is used to identify an Internet of Things device group where the Internet of Things device 102 is located. In an implementation, the Internet of Things device ID may be referred to as "A-IoT device ID". In an implementation, the Internet of Things device group ID may be referred to as "A-IoT device group ID".

In some embodiments, the Internet of Things device 102 receives the first information. In an implementation, the Internet of Things device 102 receives the first information according to the Internet of Things device ID and/or the Internet of Things device group ID. In an implementation, the first information is sent by the first device 101. In an implementation, the Internet of Things device 102 determines and sends the second information according to the first information.

For example, the Internet of Things device 102 determines whether the Internet of Things device ID and/or the Internet of Things device group ID in the first information is the Internet of Things device ID and/or Internet of Things device group ID corresponding to the Internet of Things device 102. If it is determined that the Internet of Things device ID and/or the Internet of Things device group ID in the first information is the Internet of Things device ID and/or Internet of Things device group ID corresponding to the Internet of Things device 102, the Internet of Things device 102 receives the first information. Otherwise, the Internet of Things device 102 may discard the first information or not perform further operations on the first information.

In some embodiments, the Internet of Things device ID and/or the Internet of Things device group ID corresponding to the Internet of Things device 102 may be preset at the factory.

In some embodiments, the Internet of Things device ID and/or the Internet of Things device group ID corresponding to the Internet of Things device 102 may be configured by the first device 101. For example, before sending the first information, the first device 101 may first send ID configuration information to the Internet of Things device 102, which is used to configure the Internet of Things device ID and/or the Internet of Things device group ID of the Internet of Things device 102. After receiving the ID configuration information, the Internet of Things device 102 may set an ID corresponding to the ID configuration information as the Internet of Things device ID and/or Internet of Things device group ID of the Internet of Things device 102.

In some embodiments, the first information may also include an authentication code, which is used for the Internet of Things device 102 to authenticate the first device 101. In an implementation, the authentication code is used for the first device 101 to identify itself to the Internet of Things device 102, or to declare that the first device 101 is authorized to read data corresponding to the second information.

In an implementation, the authentication code may be a symmetric key such as a random number, a pseudo-random number, etc. In an implementation, the Internet of Things device 102 may store verification information for verifying the authentication code. In an implementation, the verification information may be pre-configured by the first device 101 for the Internet of Things device 102. In an implementation, the verification information may be information corresponding to the authentication code. For example, the first device 101 may send the verification information to the Internet of Things device 102 before sending the first information, so that the Internet of Things device 102 may be configured with the verification information, and the Internet of Things device 102 may verify authentication information based on the verification information after receiving the authentication information corresponding to the first device 101.

In an implementation, the Internet of Things device 102 may determine whether to send the second information to the first device 101 based on whether the first information includes the authentication code. For example, if the Internet of Things device 102 receives the first information and determines that the first information does not include the authentication code, it may discard the first information or not send the second information to the first device 101. If the first information includes the authentication code, the Internet of Things device 102 may generate and send the second information according to the first information.

In an implementation, the Internet of Things device 102 may determine whether to send the second information to the first device 101 according to the authentication code in the first information. For example, the Internet of Things device 102 may compare whether the verification information stored by itself matches the authentication code in the first information, and if not matching, the Internet of Things device 102 may discard the first information or not send the second information to the first device 101. In an implementation, the second information may be sent in a case that the Internet of Things device 102 determines that the authentication is passed according to the authentication code.

In some embodiments, a first authentication code sent by the first device 101 to the Internet of Things device 102 is different from a second authentication code sent by a second device to the Internet of Things device 102; or a third authentication code sent by the first device 102 to a first Internet of Things device is different from a fourth authentication code sent by the first device to a second Internet of Things device. In an implementation, the second device may be the same type of device as the first device.

In some embodiments, the first authentication code received by the Internet of Things device 102 from the first device 101 is different from the second authentication code received by the Internet of Things device 102 from the second device; or the Internet of Things device 102 is the first Internet of Things device, the third authentication code received by the first Internet of Things device from the first device 102 is different from the fourth authentication code received by the second Internet of Things device from the first device. In some embodiments, the authentication code corresponds to the first device 101 and the Internet of Things device 102.

In an implementation, for the same first device and different Internet of Things devices, or different first devices and the same Internet of Things device, authentication codes included in the first information are different. For example, if there is a first device communicatively connected with a plurality of Internet of Things devices, the first device may configure different verification information for each Internet of Things device, and the first device may send different authentication codes for different Internet of Things devices. In another example, if there are a plurality of first devices communicatively connected with the same Internet of Things device, each first device may configure different verification information to the Internet of Things device and send different authentication codes.

In some embodiments, the first information may include scheduling request information. In an implementation, the scheduling request information is used to request the Internet of Things device 102 to send the second information. In an implementation, the Internet of Things device 102 may send the second information in response to the scheduling request information. In an implementation, the second information is sent by the Internet of Things device 102 in response to a scheduling request. In an implementation, the Internet of Things device 102 may send the second information upon receiving the scheduling request information. In an implementation, the Internet of Things device 102 may determine whether to allow the first device 101 to acquire the second information after receiving the scheduling request information.

For example, after receiving the scheduling request information, the Internet of Things device 102 may determine whether to allow the first device 101 to acquire the second information according to the authentication code in the first information. If it is determined that the first device 101 is not allowed to acquire the second information, the Internet of Things device 102 does not send the second information to the first device 101.

In an implementation, after receiving the scheduling request information, the Internet of Things device 102 may determine, by itself, whether to send the second information to the first device 101 or whether to allow the first device 101 to acquire the second information. For example, after receiving the scheduling request information, the Internet of Things device 102 may determine whether to send the second information to the first device 101 according to its own load or power level. For example, when its power level is lower than a preset threshold, it does not send the second information to the first device 101 or does not allow the first device 101 to acquire the second information.

In some embodiments, the first information may include scheduling indication information. In an implementation, the scheduling indication information indicates the data type included in the second information. In an implementation, the second information is determined by the Internet of Things device 102 according to the scheduling indication information. In an implementation, the scheduling indication information indicates the data type requested by the first device 101. In an implementation, the scheduling indication information is determined based on the above step S2104, and for its specific implementations reference may be made to implementations of step S2104 and other related parts, which will not be repeated here.

In some embodiments, the data type requested by the first information is at least one of data types of the Internet of Things device 102. For example, the data type indicated by the scheduling indication information in the first information is at least one data type in the second data type.

In some embodiments, the first information includes at least one of: an Internet of Things device ID for identifying the Internet of Things device 102; an Internet of Things device group ID for identifying an Internet of Things device group where the Internet of Things device 102 is located; an authentication code, which is used for the Internet of Things device 102 to perform authentication; scheduling request information used to request the Internet of Things device 102 to send second information; or scheduling indication information indicating a data type included in second information.

In some embodiments, the first information may be referred to as "data request information", "data information acquisition instruction", "Internet of Things device data reading request" and the like, and the name of the first information is not limited in the embodiments of the present disclosure.

At step S2106, the Internet of Things device 102 sends third information (e.g., feedback information).

In some embodiments, the third information indicates feedback information of the Internet of Things device 102 for the first information. In an implementation, the Internet of Things device 102 sends the third information in response to the first information. In an implementation, the Internet of Things device 102 sends the third information upon receiving the first information. In an implementation, the Internet of Things device 102 sends the third information according to the first information.

In some embodiments, step S2106 may be performed when the Internet of Things device 102 determines that the authentication is passed according to the authentication code in the first information. In an implementation, step S2106 may be performed when the Internet of Things device 102 determines that the Internet of Things device ID and/or the Internet of Things device group ID in the first information correspond to the Internet of Things device ID and/or Internet of Things device group ID of the Internet of Things device 102.

In some embodiments, the third information may be determined by the Internet of Things device 102 according to at least one of scheduling request information, scheduling indication information or authentication information in the first information.

For example, after receiving the first information, if the Internet of Things device 102 determines that its own Internet of Things device ID and/or Internet of Things device group ID matches the Internet of Things device ID and/or the Internet of Things device group ID in the first information, the Internet of Things device 102 may authenticate the first device 101 according to the authentication code. If the authentication is passed, the Internet of Things device 102 determines whether to allow the first device 101 to acquire the data type indicated in the scheduling indication information, or whether to allow the first device 101 to acquire the second information requested by the scheduling request information, and then obtain the third information.

In some embodiments, the third information includes at least one of first feedback information, second feedback information or third feedback information. In an implementation, the first feedback information indicates whether the Internet of Things device allows the first device 101 to acquire the second information. In an implementation, the second feedback information is used to request power supply from the first device 101. In an implementation, the second feedback information is used to instruct the first device 101 to send a charging signal to the Internet of Things device 102. In an implementation, the third feedback information indicates an offset of sending the second information to the first device 101.

In an implementation, whether to send the second feedback information is determined by the Internet of Things device 102 according to its own power level. For example, if the power level of the Internet of Things device 102 is lower than the preset threshold, it sends the second feedback information to the first device 101 via the third information to request for power supply.

In some embodiments, the first device 101 receives the third information. In an implementation, the first device 101 may receive the second information, or determine whether to receive the second information, or whether to expect to receive the second information based on the third information.

For example, if the first feedback information indicates that the Internet of Things device 102 does not allow the first device 101 to acquire the second information, the first device 101 may not receive the second information or may not expect to receive the second information. For another example, the first device 101 may determine when to receive the second information based on the second feedback information and/or the third feedback information, which will be described in detail in implementations of step S2107 and not repeated here.

At step S2107, the Internet of Things device 102 sends the second information (e.g., data information).

In some embodiments, the second information indicates information of the Internet of Things device 102. In an implementation, the second information indicates any information of the Internet of Things device 102. For example, the second information indicates some or all of state information, device information, control information, configuration information, article information, sensor data information, etc. of the Internet of Things device 102.

In some embodiments, the second information includes at least one of sensor data detected by the Internet of Things device 102, or coding information of the Internet of Things device 102. In an implementation, the coding information of the Internet of Things device 102 may include at least one code domain in the coding information. In an implementation, the sensor data may include data detected by some or all sensors of the Internet of Things device 102.

In some embodiments, a content included in the second information is determined by the Internet of Things device 102 according to the scheduling indication information in the first information. For example, if the data type indicated by the scheduling indication information includes data types corresponding to a temperature sensor and a humidity sensor and data types of code domains corresponding to an article type, a cell ID and an article serial number, after receiving the first information, the Internet of Things device 102 generates the second information according to the scheduling indication information. The second information includes data collected by the temperature sensor and the humidity sensor, and data in the code domains corresponding to the article type, the cell ID and the article serial number.

In some embodiments, step S2107 is executed after the execution of step S2106 is completed.

In some embodiments, the Internet of Things device 102 sends the second information after the authentication is passed. In an implementation, the second information is sent when the Internet of Things device 102 determines that the authentication is passed.

In some embodiments, the Internet of Things device 102 sends the second information after determining that a second condition is satisfied. In an implementation, the second condition includes at least one of: the Internet of Things device 102 having sent the first feedback information, and the first feedback information indicating that the Internet of Things device 102 allows the first device 101 to read data information; the Internet of Things device 102 having sent the second feedback information, and receiving a charging signal or completing charging; or the Internet of Things device 102 having sent the third feedback information.

In some embodiments, the first device 101 receives the second information. In an implementation, the first device 101 determines that a first condition is satisfied and receives the second information. In an implementation, the first condition includes at least one of: the first device 101 receiving the first feedback information, and the first feedback information indicating that the Internet of Things device 102 allows the first device 101 to read the data information; the first device 101 receiving the second feedback information, and a transmission of a charging signal reaching a first duration; or the first device 101 receiving the third feedback information, and a waiting time reaching the offset.

In an implementation, the offset is determined by the first device 101 according to the third feedback information. In an implementation, the first duration is determined according to the offset. For example, the first duration is equal to the offset plus a preset duration. In an implementation, the first duration is indicated by an upper layer signaling. In an implementation, the first duration is predefined by the protocol. In an implementation, the first duration may be equal to, longer than or shorter than the offset, which is not limited in the embodiments of the present disclosure.

In some embodiments, the second information is sent when a third condition is satisfied. The third condition includes at least one of: the Internet of Things device 102 determining that the authentication is passed according to the authentication code; the Internet of Things device 102 receiving the scheduling request information; or the Internet of Things device 102 receiving the scheduling indication information and determining and obtaining the second information according to the scheduling indication information.

In some embodiments, the second information may be referred to as "data information", "Internet of Things device information", "coding information", "sensor information" and the like, and the name of the second information is not limited in the embodiments of the present disclosure.

In some embodiments, "information" may be referred to by other names, which is not limited to those listed in the embodiments. Terms such as "data type", "information", "message", "signal", "signaling", "report", "configuration", "indication", "instruction", "command", "channel", "parameter", "domain", "field", "symbol", "symbol", "codebook", "codeword", "codepoint", "bit", "data", "program" and "chip" are interchangeable.

In some embodiments, terms "codebook", "codeword" and "precoding matrix" are interchangeable. For example, codebook may be a collection of one or more codewords/precoding matrices.

In some embodiments, terms such as "moment", "time point", "time" and "time position" are interchangeable, and terms such as "duration", "time period", "time window", "window" and "time" are interchangeable.

In some embodiments, terms such as "frame", "radio frame", "subframe", "slot", "sub-slot", "mini-slot", "symbol", "symbol" and "transmission time interval (TTI)" are interchangeable.

In some embodiments, terms such as "acquire", "obtain", "gain", "receive", "transmit", "bi-directional transmit" and "transmit and/or receive" are interchangeable. These terms can be interpreted as receiving from other subjects, obtaining from protocols, obtaining from upper layers, processing by itself, implementing independently and so on.

In some embodiments, terms such as "send", "launch", "report", "distribute", "transmit", "bi-directional transmit" and "send and/or receive" are interchangeable.

In some embodiments, terms "certain", "predetermined", "preset", "set", "indicated", "certain one", "any" and "first" are interchangeable. That is, "certain A", "predetermined A", "preset A", "set A", "indicated A", "certain one A", "any A" and "first A" may be interpreted as a pre-specified A in a protocol, an A obtained through setting, configuration or indication, a specific A, a certain A, any A or first A, which is not limited here.

In some embodiments, a judgment or decision can be made based on a 1-bit value (0 or 1) or a boolean ("true" or "false"), or through comparison (for example, comparing it with a preset value), which is not limited herein.

In some embodiments, "not expect to receive" may be interpreted as not receiving on time domain resources and/or frequency domain resources or not performing subsequent processing on data and the like after receiving data, and "not expect to send" may be interpreted as not sending or sending but not expecting a recipient to respond to a sent content.

The information processing method according to the embodiments of the present disclosure may include at least one of step S2101-step S2107. For example, step S2105 may be implemented as an independent embodiment, step S2103 may be implemented as an independent embodiment, step S2106 may be implemented as an independent embodiment, steps S2101 and S2102 may be implemented as an independent embodiment, or steps S2105-S2107 may be implemented as an independent embodiment, which is not limited here.

In some embodiments, step S2106 and step S2107 may be executed in reverse order or simultaneously.

In some embodiments, steps S2101-S2104 and steps S2106-S2107 may be performed, and one or more of these steps may be omitted or replaced in different embodiments.

In some embodiments, steps S2102-S2107 may be performed, and one or more of these steps may be omitted or replaced in different embodiments.

In some embodiments, steps S2101-S2105 and step S2107 may be performed, and one or more of these steps may be omitted or replaced in different embodiments.

In some embodiments, reference may be made to other implementations described before or after the description corresponding to FIG. 2.

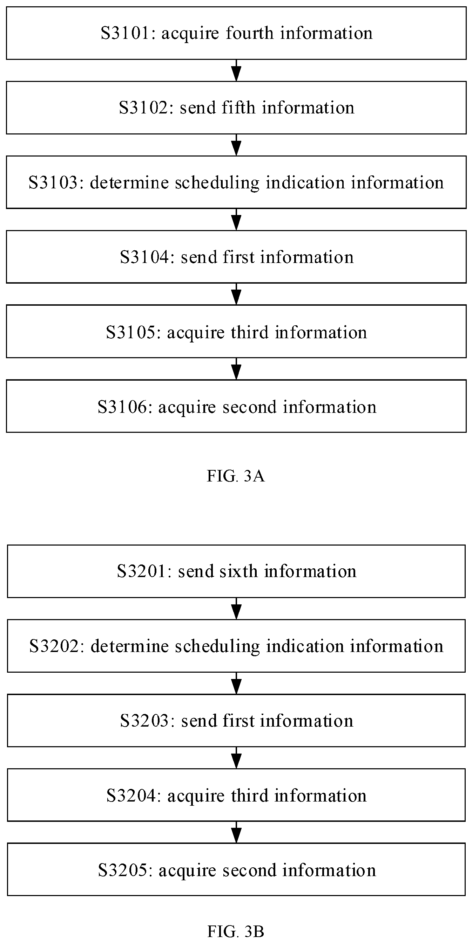

FIG. 3A is a schematic flowchart of an information processing method illustrated according to an embodiment of the present disclosure. As illustrated in FIG. 3A, embodiments of the present disclosure are related to an information processing method. The method includes the following steps.

At step S3101, fourth information is acquired.

For implementations of step S3101, reference may be made to the implementations of step S2101 in FIG. 2 and other related parts in the embodiments related to FIG. 2, which will not be repeated here.

In some embodiments, the first device 101 receives the fourth information sent by the Internet of Things device 102, which is not limited here. The first device 101 may receive the fourth information sent by another entity.

In some embodiments, the first device 101 acquires the fourth information specified by a protocol.

In some embodiments, the first device 101 acquires the fourth information from an upper layer(s).

In some embodiments, the first device 101 acquires the fourth information through processing.

In some embodiments, step S3101 is omitted, and the first device 101 autonomously realizes a function indicated by the fourth information, or the above function is a default function.

At step S3102, fifth information is sent.

For implementations of step S3102, reference may be made to the implementations of step S2102 in FIG. 2 and other related parts in the embodiments related to FIG. 2, which will not be repeated here.

In some embodiments, the first device 101 sends the fifth information to the Internet of Things device 102, which is not limited here. The first device 101 may also send the fifth information to another entity.

At step S3103, scheduling indication information is determined.

For implementations of step S3103, reference may be made to the implementations of step S2104 in FIG. 2 and other related parts in the embodiments related to FIG. 2, which will not be repeated here.

In some embodiments, a data type indicated by the scheduling indication information is determined according to a second data type configured by the fifth information.

In some other embodiments, the data type indicated by the scheduling indication information is determined according to a first data type indicated by the fourth information.

In some embodiments, the data type indicated by the scheduling indication information is specified by a protocol, or indicated by an upper layer(s), or determined by the first device 101 itself.

At step S3104, first information is sent.

For implementations of step S3104, reference may be made to the implementations of step S2105 in FIG. 2 and other related parts in the embodiments related to FIG. 2, which will not be repeated here.

In some embodiments, the first device 101 sends the first information to the Internet of Things device 102, which is not limited here. The first device 101 may also send the first information to another entity.

At step S3105, third information is acquired.

For implementations of step S3105, reference may be made to the implementations of step S2106 in FIG. 2 and other related parts in the embodiments related to FIG. 2, which will not be repeated here.

In some embodiments, the first device 101 receives the third information sent by the Internet of Things device 102, which is not limited here. The first device 101 may also receive the third information sent by another entity.

In some embodiments, step S3101 is omitted, and the first device 101 autonomously realizes a function indicated by the third information, or above function is a default function.

At step S3106, second information is acquired.

For implementations of step S3106, reference may be made to the implementations of step S2107 in FIG. 2 and other related parts in the embodiments related to FIG. 2, which will not be repeated here.

In some embodiments, the first device 101 receives the third information sent by the Internet of Things device 102, which is not limited here. The first device 101 may also receive the third information sent by another entity.

The information processing method involved in embodiments of the present disclosure may include at least one of step S3101-step S3106. For example, step S3104 may be implemented as an independent embodiment, step S3105 may be implemented as an independent embodiment, step S3101 may be implemented as an independent embodiment, steps S3104-S3106 may be implemented as an independent embodiment, steps S3101-S3103 may be implemented as an independent embodiment, or step S3101 and steps S3103-S3106 may be implemented as an independent embodiment, which is not limited here.

In some embodiments, steps S3101-S3103 and steps S3105-S3106 may be performed, and one or more of these steps may be omitted or replaced in different embodiments.

In some embodiments, steps S3102-S3106 may be performed, and one or more of these steps may be omitted or replaced in different embodiments.

FIG. 3B is a schematic flowchart of an information processing method illustrated according to an embodiment of the present disclosure. As illustrated in FIG. 3B, embodiments of the present disclosure are related to an information processing method. The method includes the following steps.

At step S3201, sixth information is sent.

For implementations of step S3201, reference may be made to the implementations of step S2103 in FIG. 2 and other related parts in the embodiments related to FIG. 2, which will not be repeated here.

In some embodiments, the first device 101 sends the sixth information to the Internet of Things device 102, which is not limited here. The first device 101 may also send the sixth information to another entity.

At step S3202, scheduling indication information is determined.

For implementations of step S3202, reference may be made to the implementations of step S2104 in FIG. 2 and other related parts in the embodiments related to FIG. 2, which will not be repeated here.

In some embodiments, a data type indicated by the scheduling indication information is determined according to a third data type configured by the sixth information.

In some embodiments, the data type indicated by the scheduling indication information is specified by a protocol, or indicated by an upper layer(s), or determined by the first device 101 itself.

At step S3203, first information is sent.

For implementations of step S3203, reference may be made to the implementations of step S2105 in FIG. 2 and step S3104 in FIG. 3A and other related parts in the embodiments related to FIG. 2 and FIG. 3A, which will not be repeated here.

At step S3204, third information is acquired.

For implementations of step S3204, reference may be made to the implementations of step S2106 in FIG. 2 and step S3105 in FIG. 3A and other related parts in the embodiments related to FIG. 2 and FIG. 3A, which will not be repeated here.

At step S3205, second information is acquired.

For implementations of step S3205, reference may be made to the implementations of step S2107 in FIG. 2 and step S3106 in FIG. 3A and other related parts in the embodiments related to FIG. 2 and FIG. 3A, which will not be repeated here.

The information processing method involved in embodiments of the present disclosure may include at least one of step S3201-step S3205. For example, step S3203 may be implemented as an independent embodiment, step S3205 may be implemented as an independent embodiment, step S3201 may be implemented as an independent embodiment, steps S3201-S3203 may be implemented as an independent embodiment, steps S3203-S3205 may be implemented as an independent embodiment, or step S3101 and steps S3103-S3106 may be implemented as an independent embodiment, which is not limited here.

In some embodiments, steps S3201-S3202 and steps S3203-S3205 may be performed, and one or more of these steps may be omitted or replaced in different embodiments.

In some embodiments, steps S3201-S3204 may be performed, and one or more of these steps may be omitted or replaced in different embodiments.

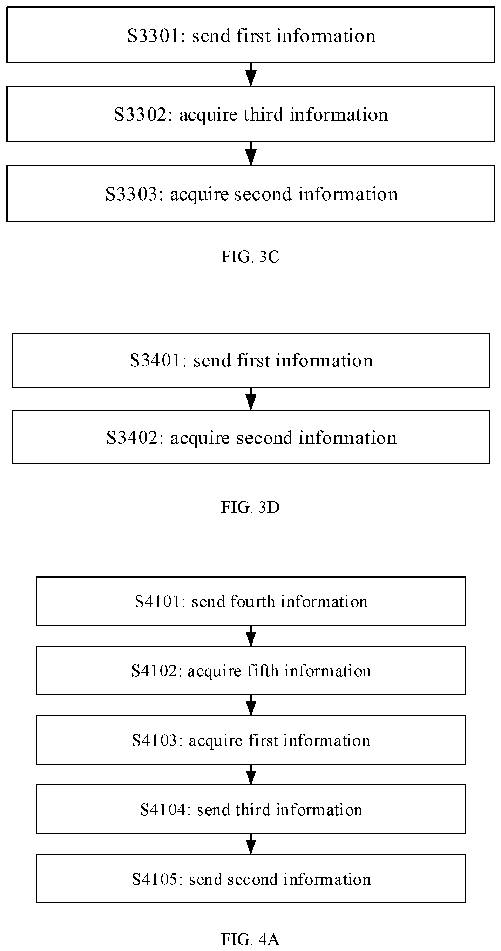

FIG. 3C is a schematic flowchart of an information processing method illustrated according to an embodiment of the present disclosure. As illustrated in FIG. 3C, embodiments of the present disclosure are related to an information processing method. The method includes the following steps.

At step S3301, first information is sent.

For implementations of step S3301, reference may be made to the implementations of step S2105 in FIG. 2, step S3104 in FIG. 3A and step S3203 in FIG. 3B and other related parts in the embodiments related to FIG. 2, FIG. 3A and FIG. 3B, which will not be repeated here.

At step S3302, third information is acquired.

For implementations of step S3302, reference may be made to the implementations of step S2106 in FIG. 2, step S3105 in FIG. 3A and step S3204 in FIG. 3B and other related parts in the embodiments related to FIG. 2, FIG. 3A and FIG. 3B, which will not be repeated here.

At step S3303, second information is acquired.

For implementations of step S3303, reference may be made to the implementations of step S2107 in FIG. 2, step S3106 in FIG. 3A and step S3205 in FIG. 3B and other related parts in the embodiments related to FIG. 2, FIG. 3A and FIG. 3B, which will not be repeated here.

The information processing method involved in embodiments of the present disclosure may include at least one of step S3301-step S3303. For example, step S3301 may be implemented as an independent embodiment, step S3302 may be implemented as an independent embodiment, step S3303 may be implemented as an independent embodiment, steps S3301-S3302 may be implemented as an independent embodiment, or steps S3302-S3303 may be implemented as an independent embodiment, which is not limited here.

In some embodiments, steps S3301-S3302 may be performed, and one or more of these steps may be omitted or replaced in different embodiments.

In some embodiments, steps S3302-S3303 may be performed, and one or more of these steps may be omitted or replaced in different embodiments.

In some embodiments, steps S3301 and S3303 may be performed, and one or more of these steps may be omitted or replaced in different embodiments.

In some embodiments, steps S3301-S3303 may be combined with steps S3101-S3103 in FIG. 3A, or steps S3301-S3303 may be combined with steps S3101 and S3103 in FIG. 3A. Steps S3301-S3303 may also be combined with steps S3201-S3202 in FIG. 3B.

FIG. 3D is a schematic flowchart of an information processing method illustrated according to an embodiment of the present disclosure. As illustrated in FIG. 3D, embodiments of the present disclosure are related to an information processing method. The method includes the following steps.

At step S3401, first information is sent.

For implementations of step S3401, reference may be made to the implementations of step S2105 in FIG. 2, step S3104 in FIG. 3A, step S3203 in FIG. 3B and step S3301 in FIG. 3C and other related parts in the embodiments related to FIG. 2, FIG. 3A, FIG. 3B and FIG. 3C, which will not be repeated here.

At step S3402, second information is acquired.

For implementations of step S3402, reference may be made to the implementations of step S2107 in FIG. 2, step S3106 in FIG. 3A, step S3205 in FIG. 3B and step S3303 in FIG. 3C and other related parts in the embodiments related to FIG. 2, FIG. 3A, FIG. 3B and FIG. 3C, which will not be repeated here.

The information processing method involved in embodiments of the present disclosure may include at least one of step S3401-step S3402. For example, step S3401 may be implemented as an independent embodiment, and step S3402 may be implemented as an independent embodiment.

In some embodiments, step S3401 may be performed, and one or more of these steps may be omitted or replaced in different embodiments.

In some embodiments, step S3402 may be performed, and one or more of these steps may be omitted or replaced in different embodiments.

In some embodiments, steps S3401-S3402 may be combined with steps S3101-S3103 in FIG. 3A, or may be combined with steps S3101 and S3103 in FIG. 3A. Steps S3401-S3402 may also be combined with steps S3201-S3202 in FIG. 3B.

In some embodiments, the first information includes at least one of:
an Internet of Things device ID used to identify the Internet of Things device 102; or
an Internet of Things device group ID used to identify an Internet of Things device group where the Internet of Things device 102 is located.

In some embodiments, the Internet of Things device ID and/or the Internet of Things device group ID is configured by the first device 101 for the Internet of Things device 102.

In some embodiments, the first information includes an authentication code used for the Internet of Things device 102 to authenticate the first device 101; and
the second information is sent in a case that the Internet of Things device 102 determines that the authentication is passed according to the authentication code.

In some embodiments, the authentication code corresponds to the first device and the Internet of Things device.

In some embodiments, the first information includes scheduling request information used to request the Internet of Things device 102 to send the second information; and
the second information is sent by the Internet of Things device 102 in response to the scheduling request information.

In some embodiments, the first information includes scheduling indication information indicating a data type included in the second information; and
the second information is determined by the Internet of Things device 102 according to the scheduling indication information.

In some embodiments, the second information includes at least one of:
sensor data detected by the Internet of Things device 102; or
coding information of the Internet of Things device 102, in which the coding information includes at least one code domain.

In some embodiments, before receiving the second information, the method includes:
receiving third information, in which the third information includes at least one of:
first feedback information indicating whether the Internet of Things device 102 allows the first device 101 to read data information;
second feedback information used to request the first device 101 for power supply; or
third feedback information indicating an offset of sending the second information to the first device 101.

In some embodiments, receiving the second information includes:
determining that a first condition is satisfied; and receiving the second information, in which the first condition includes at least one of:
the first device receiving the first feedback information, and the first feedback information indicating that the Internet of Things device 102 allows the first device 101 to read the data information;
the first device receiving the second feedback information, and a transmission of a charging signal reaching a first duration; or
the first device receiving the third feedback information, and a waiting time reaching the offset.

In some embodiments, the first duration is determined according to the offset, or the first duration is predefined by a protocol.

In some embodiments, the method includes:
receiving fourth information, in which the fourth information indicates a first data type, and the first data type is a data type supported by the Internet of Things device 102; and
determining scheduling indication information, in which a data type indicated by the scheduling indication information is at least one data type included in the first data type.

In some embodiments, the method includes:
receiving fourth information, in which the fourth information indicates a first data type, and the first data type is a data type supported by the Internet of Things device 102;
sending fifth information, in which the fifth information is used to configure a data type of the Internet of Things device 102 as a second data type, and the second data type includes at least one data type included in the first data type; and
determining scheduling indication information, in which a data type indicated by the scheduling indication information is at least one data type included in the second data type.

In some embodiments, the method includes:
sending sixth information, in which the sixth information is used to configure a data type of the Internet of Things device 102 as a third data type; and
determining scheduling indication information, in which a data type indicated by the scheduling indication information is at least one data type included in the third data type.

In some embodiments, the first device 101 includes any one of:
an access network device, a core network device, a terminal, a radio frequency read-write device, an intermediate node or an assisting node.

FIG. 4A is a schematic flowchart of an information processing method illustrated according to an embodiment of the present disclosure. As illustrated in FIG. 4A, embodiments of the present disclosure are related to an information processing method. The method includes the following steps.

At step S4101, fourth information is sent.

For implementations of step S4101, reference may be made to the implementations of step S2101 in FIG. 2 and other related parts in the embodiments related to FIG. 2, which will not be repeated here.

In some embodiments, the Internet of Things device 102 sends the fourth information to the first device 101, which is not limited here. The Internet of Things device 102 may also send the fourth information to another entity.

At step S4102, fifth information is acquired.

For implementations of step S4102, reference may be made to the implementations of step S2102 in FIG. 2 and other related parts in the embodiments related to FIG. 2, which will not be repeated here.

In some embodiments, the Internet of Things device 102 receives the fifth information sent by the first device 101, which is not limited here. The Internet of Things device 102 may also receive the fifth information sent by another entity.

In some embodiments, the Internet of Things device 102 acquires the fifth information specified by a protocol.

In some embodiments, the Internet of Things device 102 acquires the fifth information from an upper layer(s).

In some embodiments, the Internet of Things device 102 acquires the fifth information through processing.

In some embodiments, step S4102 is omitted, and the Internet of Things device 102 autonomously realizes a function indicated by the fifth information, or the above function is a default function.

At step S4103, first information is acquired.

For implementations of step S4103, reference may be made to the implementations of step S2105 in FIG. 2 and other related parts in the embodiments related to FIG. 2, which will not be repeated here.

In some embodiments, the Internet of Things device 102 receives the first information sent by the first device 101, which is not limited here. The Internet of Things device 102 may also receive the first information sent by another entity.

In some embodiments, the Internet of Things device 102 acquires the first information specified by a protocol.

In some embodiments, the Internet of Things device 102 acquires the first information from an upper layer(s).

In some embodiments, the Internet of Things device 102 acquires the first information through processing.

In some embodiments, step S4103 is omitted, and the Internet of Things device 102 autonomously realizes a function indicated by the first information, or the above function is a default function.

At step S4104, third information is sent.

For implementations of step S4104, reference may be made to the implementations of step S2106 in FIG. 2 and other related parts in the embodiments related to FIG. 2, which will not be repeated here.

In some embodiments, the Internet of Things device 102 sends the third information to the first device 101, which is not limited here. The Internet of Things device 102 may also send the third information to another entity.

At step S4105, second information is sent.

For implementations of step S4105, reference may be made to the implementations of step S2107 in FIG. 2 and other related parts in the embodiments related to FIG. 2, which will not be repeated here.

In some embodiments, the Internet of Things device 102 sends the second information to the first device 101, which is not limited here. The Internet of Things device 102 may also send the second information to another entity.

The information processing method involved in embodiments of the present disclosure may include at least one of step S4101-step S4105. For example, step S4104 may be implemented as an independent embodiment, step S4105 may be implemented as an independent embodiment, step S4106 may be implemented as an independent embodiment, steps S4103-S4105 may be implemented as an independent embodiment, or steps S4101-S4102 may be implemented as an independent embodiment, which is not limited here.

In some embodiments, step S4101-S4102 and S4104-S4105 may be performed, and one or more of these steps may be omitted or replaced in different embodiments.

In some embodiments, step S4101-S4104 may be performed, and one or more of these steps may be omitted or replaced in different embodiments.

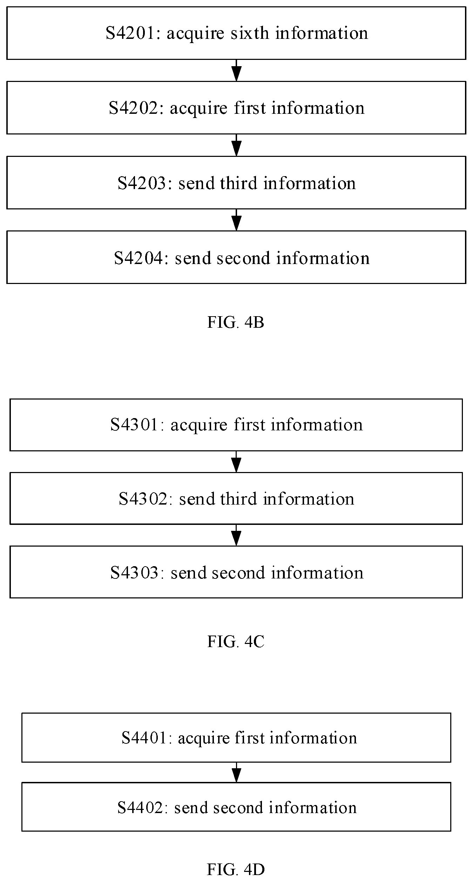

FIG. 4B is a schematic flowchart of an information processing method illustrated according to an embodiment of the present disclosure. As illustrated in FIG. 4B, embodiments of the present disclosure are related to an information processing method. The method includes the following steps.

At step S4201, sixth information is acquired.

For implementations of step S4201, reference may be made to the implementations of step S2103 in FIG. 2 and other related parts in the embodiments related to FIG. 2, which will not be repeated here.

In some embodiments, the Internet of Things device 102 receives the sixth information sent by the first device 101, which is not limited here. The Internet of Things device 102 may also receive the sixth information sent by another entity.

In some embodiments, the Internet of Things device 102 acquires the sixth information specified by a protocol.

In some embodiments, the Internet of Things device 102 acquires the sixth information from an upper layer(s).

In some embodiments, the Internet of Things device 102 acquires the sixth information through processing.

In some embodiments, step S4102 is omitted, and the Internet of Things device 102 autonomously realizes a function indicated by the sixth information, or the above function is a default function.

At step S4202, first information is acquired.

For implementations of step S4202, reference may be made to the implementations of step S2105 in FIG. 2 and step S4103 in FIG. 4A and other related parts in the embodiments related to FIG. 2 and FIG. 4A, which will not be repeated here.

At step S4203, third information is sent.

For implementations of step S4203, reference may be made to the implementations of step S2106 in FIG. 2 and step S4104 in FIG. 4A and other related parts in the embodiments related to FIG. 2 and FIG. 4A, which will not be repeated here.

At step S4204, second information is sent.

For implementations of step S4204, reference may be made to the implementations of step S2107 in FIG. 2 and step S4105 in FIG. 4A and other related parts in the embodiments related to FIG. 2 and FIG. 4A, which will not be repeated here.

The information processing method involved in embodiments of the present disclosure may include at least one of step S4201-step S4204. For example, step S4204 may be implemented as an independent embodiment, step S4203 may be implemented as an independent embodiment, step S4201 may be implemented as an independent embodiment, steps S4203-S4204 may be implemented as an independent embodiment, or steps S4201-S4202 may be implemented as an independent embodiment, which is not limited here.

In some embodiments, step S4201 and steps S4203-S4204 may be performed, and one or more of these steps may be omitted or replaced in different embodiments.

In some embodiments, step S4201-S4203 may be performed, and one or more of these steps may be omitted or replaced in different embodiments.

FIG. 4C is a schematic flowchart of an information processing method illustrated according to an embodiment of the present disclosure. As illustrated in FIG. 4C, embodiments of the present disclosure are related to an information processing method. The method includes the following steps.

At step S4301, first information is acquired.

For implementations of step S4301, reference may be made to the implementations of step S2105 in FIG. 2, step S4103 in FIG. 4A and step S4202 in FIG. 4B and other related parts in the embodiments related to FIG. 2, FIG. 4A and FIG. 4B, which will not be repeated here.

At step S4302, third information is sent.

For implementations of step S4302, reference may be made to the implementations of step S2106 in FIG. 2, step S4104 in FIG. 4A and step S4203 in FIG. 4B and other related parts in the embodiments related to FIG. 2, FIG. 4A and FIG. 4B, which will not be repeated here.

At step S4303, second information is sent.

For implementations of step S4303, reference may be made to the implementations of step S2107 in FIG. 2, step S4105 in FIG. 4A and step S4204 in FIG. 4B and other related parts in the embodiments related to FIG. 2, FIG. 4A and FIG. 4B, which will not be repeated here.

The information processing method involved in embodiments of the present disclosure may include at least one of step S4301-step S4303. For example, step S4301 may be implemented as an independent embodiment, step S4302 may be implemented as an independent embodiment, step S4303 may be implemented as an independent embodiment, steps S4301-S4302 may be implemented as an independent embodiment, or steps S4302-S4303 may be implemented as an independent embodiment, which is not limited here.

In some embodiments, steps S4301-S4302 may be performed, and one or more of these steps may be omitted or replaced in different embodiments.

In some embodiments, steps S4302-S4303 may be performed, and one or more of these steps may be omitted or replaced in different embodiments.

In some embodiments, steps S4301-S4103 may be combined with steps S4101-S4102 in FIG. 4A, or steps S4301-S4303 may be combined with step S4101 in FIG. 4A, or steps S4301-S4303 may be combined with step S4201 in FIG. 4B.

FIG. 4D is a schematic flowchart of an information processing method illustrated according to an embodiment of the present disclosure. As illustrated in FIG. 4D, embodiments of the present disclosure are related to an information processing method. The method includes the following steps.

At step S4401, first information is acquired.

For implementations of step S4401, reference may be made to the implementations of step S2105 in FIG. 2, step S4103 in FIG. 4A, step S4202 in FIG. 4B and step S4301 in FIG. 4C and other related parts in the embodiments related to FIG. 2, FIG. 4A, FIG. 4B and FIG. 4C, which will not be repeated here.

At step S4402, second information is sent.

For implementations of step S4402, reference may be made to the implementations of step S2107 in FIG. 2, step S4105 in FIG. 4A, step S4204 in FIG. 4B and step S4303 in FIG. 4C and other related parts in the embodiments related to FIG. 2, FIG. 4A, FIG. 4B and FIG. 4C, which will not be repeated here.

The information processing method involved in the embodiments of the present disclosure may include at least one of step S4401-step S4402. For example, step S4401 may be implemented as an independent embodiment, or step S4402 may be implemented as an independent embodiment.

In some embodiments, step S4401 may be performed, and one or more of these steps may be omitted or replaced in different embodiments.

In some embodiments, step S4402 may be performed, and one or more of these steps may be omitted or replaced in different embodiments.

In some embodiments, steps S4401-S4402 may be combined with steps S4101-S4102 in FIG. 4A, or steps S4401-S4402 may be combined with step S4101 in FIG. 4A, or steps S4401-S4402 may be combined with step S4201 in FIG. 4B.

In some embodiments, the first information includes at least one of:

an Internet of Things device ID used to identify the Internet of Things device 102; or
an Internet of Things device group ID used to identify an Internet of Things device group where the Internet of Things device is located.

In some embodiments, the Internet of Things device ID and/or the Internet of Things device group ID is configured by the first device 101 for the Internet of Things device 102.

In some embodiments, the first information includes an authentication code used for the Internet of Things device 102 to authenticate the first device 101; and
the second information is sent in a case that the Internet of Things device 102 determines that the authentication is passed according to the authentication code.

In some embodiments, the authentication code corresponds to the first device and the Internet of Things device.

In some embodiments, the first information includes scheduling request information used to request the Internet of Things device 102 to send the second information; and
the second information is sent by the Internet of Things device 102 in response to the scheduling request information.

In some embodiments, the first information includes scheduling indication information indicating a data type included in the second information; and
the second information is determined by the Internet of Things device 102 according to the scheduling indication information.

In some embodiments, the second information includes at least one of:
sensor data detected by the Internet of Things device 102; or
coding information of the Internet of Things device 102, in which the coding information includes at least one code domain.

In some embodiments, before sending the second information, the method includes:
sending third information, in which the third information includes at least one of:
first feedback information indicating whether the Internet of Things device 102 allows the first device 101 to read data information;
second feedback information used to request the first device 101 for power supply; or
third feedback information indicating an offset of sending the second information to the first device 101.

In some embodiments, sending the second information includes:
determining that a second condition is satisfied; and sending the second information, in which the second condition includes at least one of:
the Internet of Things device 102 having sent the first feedback information, and the first feedback information indicating that the Internet of Things device 102 allows the first device 101 to read the data information;
the Internet of Things device 102 having sent the second feedback information; or
the Internet of Things device 102 having sent the third feedback information.

In some embodiments, the method includes:
sending fourth information, in which the fourth information indicates a first data type, the first data type is a data type supported by the Internet of Things device 102, and
the data type indicated by the scheduling indication information is at least one data type included in the first data type.

In some embodiments, the method further includes:
sending fourth information, in which the fourth information indicates a first data type, and the first data type is a data type supported by the Internet of Things device 102; and
receiving fifth information, in which the fifth information is used to configure a data type of the Internet of Things device 102 to be a second data type, and the second data type includes at least one data type included in the first data type, and
the data type indicated by the scheduling indication information is at least one data type included in the second data type.

In some embodiments, the method further includes:
receiving sixth information, in which the sixth information is used to configure a data type of the Internet of Things device 102 to be a third data type, and
a data type indicated by the scheduling indication information is at least one data type included in the third data type.

In some embodiments, the first device 101 is any one of:
an access network device, a core network device, a terminal, a radio frequency read-write device, an intermediate node or an assisting node.

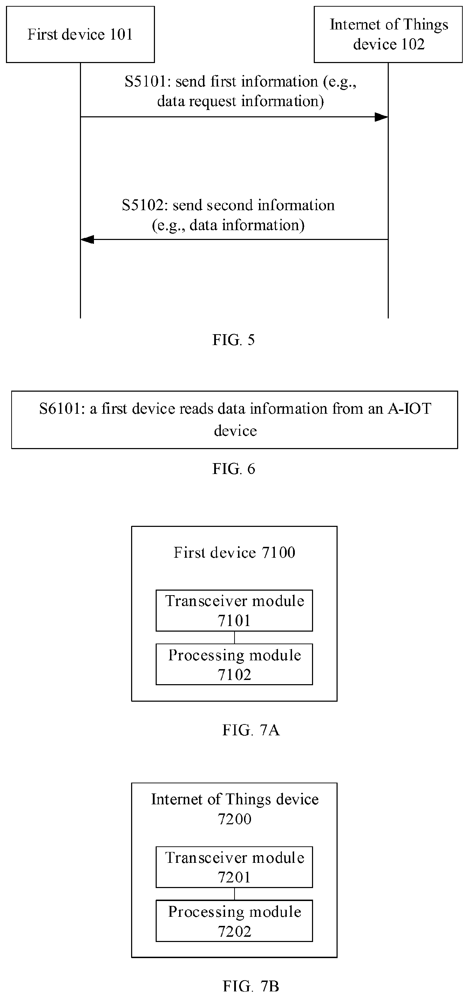

FIG. 5 is an interactive schematic diagram of an information processing method illustrated according to an embodiment of the present disclosure. As illustrated in FIG. 5, embodiments of the present disclosure are related to an information processing method. The method includes the following steps.

At step S5101, the first device 101 sends first information.

For implementations of step S5101, reference may be made to the implementations of step S2105 in FIG. 2, step S3104 in FIG. 3A, step S3203 in FIG. 3B, step S3301 in FIG. 3C, step S3401 in FIG. 3D, step S4103 in FIG. 4A, step S4202 in FIG. 4B, step S4301 in FIG. 4C and step S4401 in FIG. 4D, and other related parts in the embodiments related to FIG. 2, FIG. 3A, FIG. 3B, FIG. 3C, FIG. 3D, FIG. 4A, FIG. 4B, FIG. 4C and FIG. 4D, which will not be repeated here.

At step S5202, the Internet of Things device 102 sends second information.

For implementations of step S5102, reference may be made to the implementations of step S2107 in FIG. 2, step S3106 in FIG. 3A, step S3205 in FIG. 3B, step S3303 in FIG. 3C, step S3402 in FIG. 3D, step S4105 in FIG. 4A, step S4204 in FIG. 4B, step S4303 in FIG. 4C and step S4402 in FIG. 4D, and other related parts in the embodiments related to FIG. 2, FIG. 3A, FIG. 3B, FIG. 3C, FIG. 3D, FIG. 4A, FIG. 4B, FIG. 4C and FIG. 4D, which will not be repeated here.

In some embodiments, the above method includes the methods described in the embodiments of the communication system side, the first device side, the Internet of Things device side, etc., which will not be repeated here.

FIG. 6 is an interactive schematic diagram of an information processing method illustrated according to an embodiment of the present disclosure. As illustrated in FIG. 6, embodiments of the present disclosure are related to an information processing method. The method includes the following steps.

At step S6101, a first device reads data information from an Ambient-IoT device.

In some embodiments, the first device includes at least one of: a radio frequency read-write device, a network device (e.g., a base station), an intermediate node, an assisting node, a terminal or a core device.

In some embodiments, the first device sends at least one of first information or second information to the Ambient-IoT device. The first information includes at least one of:
an Ambient-IoT device ID used to identify the Ambient-IoT device;
an Ambient-IoT device group ID used to identify an Ambient-IoT device group where the Ambient-IoT device is located; or
an authentication code, in which for the first device, the authentication code is used for the first device to identify itself to the Ambient-IoT device, or to declare that it has the right to read; or for the Ambient-IoT device, the authentication code is used for the Ambient-IoT device to authenticate the first device. In detail, the authentication code includes, but is not limited to, a symmetric key such as a random number or a pseudo-random number.

The second information includes at least one of:
a scheduling request, used to determine that the first device initiates a scheduling request to the Ambient-IoT device; or
a scheduling request indication, used to determine specific data information requested by the first device from the Ambient-IoT device, e.g., indicating different information fields or indicating different sensor data types.

In some embodiments, after the Ambient-IoT device receives the first information and the authentication is passed, it further determines to send third information to the first device according to the scheduling request indication and/or the scheduling request. The first device determines to receive the third information of the Ambient-IoT device. The third information includes at least one of:
sensor data, including but not limited to a temperature, a humidity, a vibration intensity, a vibration duration, a light intensity, a pressure, a height, a speed, an angle, etc.;
coding information corresponding to the Ambient-IoT device, including but not limited to ID information, article information, etc.;
first feedback information, used for the Ambient-IoT device to feed back whether the Ambient-IoT device allows the first device to read data information to the first device;
second feedback information, used for the Ambient-IoT device to request the first device for power supply;
third feedback information, used for the Ambient-IoT device to report an offset of feeding back data information to the first device; or

A-IoT coding information, in which the A-IoT coding information includes at least one code domain, and one code domain indicates a certain kind of information.

In some embodiments, the first information is written/recorded/configured by the first device for the Ambient-IoT device.

In some embodiments, the first device may write/record/configure different authentication codes for different Ambient-IoT devices.

In some embodiments, a data type supported by the Ambient-IoT device is reported by the Ambient-IoT device to the first device via a first capability, or configured by the first device for the Ambient-IoT device, or configured by the first device for the Ambient-IoT device within the capability of the Ambient-IoT device.

In some embodiments, the first device sends a charging signal to the Ambient-IoT device and/or receives the third information of the Ambient-IoT device after the first device waits for a first duration. The first duration is predefined by a protocol or determined according to the offset, and a condition that triggers the above operations includes at least one of:
the first device receiving the first feedback information sent by the Ambient-IoT device and the first device being allowed to read data information;
the first device receiving the second feedback information requesting power supply sent by the Ambient-IoT device; or
the first device receiving the third feedback information sent by the Ambient-IoT device.

In the embodiments of the present disclosure, some or all of the steps and their implementations may be arbitrarily combined with some or all of the steps in other embodiments or implementations in other embodiments.

Embodiments of the present disclosure provide an apparatus for implementing any of the above methods. For example, an apparatus is provided, and the apparatus includes units/modules for implementing steps performed by the terminal in any of the above methods. For another example, another apparatus is provided, which includes units/modules for implementing steps performed by the network device (e.g., access network device, CN function node, core network device, etc.) in any of the above methods.

It should be understood that the units/modules in the above apparatus are divided based on their logical functions, and some or all of the above units/modules may be integrated on a single physical entity or may be physically separated in practical applications. In addition, the units/modules in the above apparatus may be implemented by software called by a processor. For example, the apparatus includes the processor that is connected to a memory. The memory stores instructions, and the processor calls the instructions stored in the memory to implement any of the above methods or to implement functions of the units/modules in the above apparatus. The processor may be a general-purpose processor, such as a central processing unit (CPU) or a micro-processor, and the memory is a memory in the apparatus or a memory external to the apparatus. The units/modules in the apparatus may be implemented in the form of a hardware circuit. Some or all of the functions of the units/modules may be achieved through the design of the hardware circuit. The hardware circuit may be understood as one or more processors. For example, in an implementation, the hardware circuit is an application-specific integrated circuit (ASIC). Or, some or all of the functions of the units/modules are achieved through the design of a logical relationship between components in the circuit. As another example, in another implementation, the hardware circuit may be implemented through a programmable logic device (PLD). Taking a field programmable gate array (FPGA) as an example, a large number of logical gates are included therein, and their connection relationships are configured through a configuration file to implement some or all of the functions of the above units/modules. All the units/modules of the above apparatus may be implemented entirely through software called by the processor, or entirely through a hardware circuit, or partially through software called by the processor and partially through a hardware circuit.

In the embodiments of the present disclosure, the processor is a circuit having signal processing capabilities. In an implementation, the processor may be a circuit having instruction reading and executing capabilities, such as a CPU, a micro-processor, a graphics processing unit (GPU) (which is understood as a micro-processor), or a digital signal processor (DSP). In another implementation, the processor implements certain functions through the logical relationship of a hardware circuit, which may be fixed or re-configurable. For example, the processor may be a hardware circuit implemented by an ASIC or a PLD, such as an FPGA. In a re-configurable hardware circuit, the procedure for the processor to load the configuration file to configure the hardware circuit is understood as a procedure for the processor to load the instructions to implement some or all of the functions of the above units/modules. In addition, the processor may also be an artificial intelligence (Al)-designed hardware circuit, which is understood as an ASIC, such as a neural network processing unit (NPU), a tensor processing unit (TPU) and a deep learning processing unit (DPU).

FIG. 7A is a schematic structural diagram of a first device provided by an embodiment of the present disclosure. As illustrated in FIG. 7A, the first device 7100 includes at least one of a transceiver module 7101 or a processing module 7102. In some embodiments, the transceiver module 7101 is configured to: send first information, in which the first information is used to request an Internet of Things device to send second information; and receive the second information, in which the second information indicates information of the Internet of Things device. In an implementation, the transceiver module 7101 is configured to perform the communication steps performed by the first device 101, such as transmission and/or reception in any of the above methods (e.g., step S2101, step S2102, step S2103, step S2105, step S2106 and step S2107, which are not limited here), which will not be repeated here. In an implementation, the processing module 7102 is configured to perform at least one of other steps performed by the first device 101 in any of the above methods (e.g., step S2104, which is not limited here), which will not be repeated here.

FIG. 7B is a schematic structural diagram of an Internet of Things device provided by an embodiment of the present disclosure. As illustrated in FIG. 7B, the Internet of Things device 7200 includes at least one of a transceiver module 7201 or a processing module 7202. In some embodiments, the transceiver module 7201 is configured to: receive first information sent by a first device, in which the first information is used to request the Internet of Things device to send second information; and send the second information, in which the second information indicates information of the Internet of Things device. In an implementation, the transceiver module 7201 is configured to perform the communication steps performed by the Internet of Things device 102, such as transmission and/or reception in any of the above methods (e.g., step S2101, step S2102, step S2103, step S2105, step S2106 and step S2107, which are not limited here), which will not be repeated here. In an implementation, the processing module 7202 is configured to perform at least one of other steps performed by the Internet of Things device 102 in any of the above methods (e.g., generating the second information), which will not be repeated here.

In some embodiments, the transceiver module may include a sending module and/or a receiving module. The sending module and the receiving module may be separated or integrated together. In an implementation, "transceiver module" and "transceiver" are interchangeable.

In some embodiments, the processing module may refer to one module or may include a plurality of sub-modules. In an implementation, the plurality of sub-modules each perform all or part of the steps required by the processing module. In an implementation, "processing module" and "processor" are interchangeable.

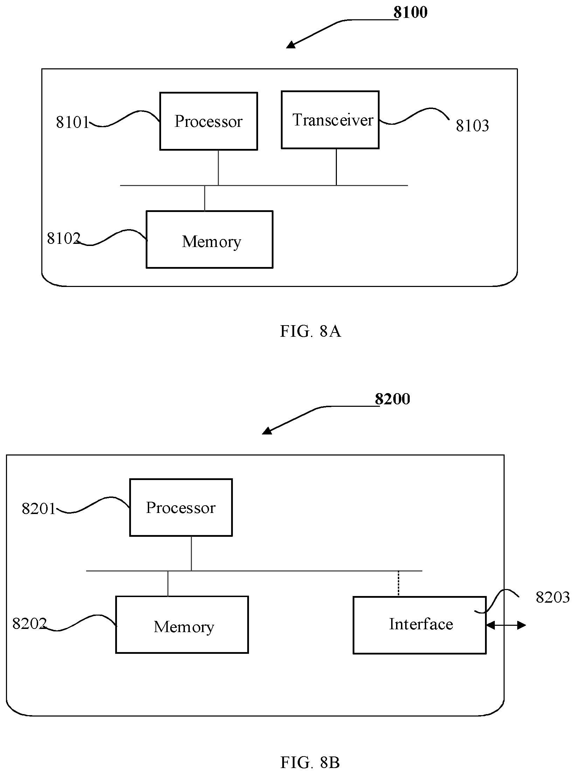

FIG. 8A is a schematic structural diagram of a communication device 8100 provided by an embodiment of the present disclosure. The communication device 8100 may be a first device or an Internet of Things device. The first device may be a network device (e.g., an access network device or a core network device), a terminal (e.g., UE), a chip, a chip system or a processor that supports the network device to implement any of the above methods, or a chip, a chip system or a processor that supports the terminal to implement any of the above methods. The communication device 8100 is used to implement the method described in the above method embodiments. For details, reference may be made to the descriptions in the above method embodiments.

As illustrated in FIG. 8A, the communication device 8100 includes one or more processors 8101. The processor 8101 may be a general-purpose processor or a dedicated processor, such as a baseband processor or a central processor. The baseband processor is configured to process communication protocols and communication data, while the central processor is used to control the communication device (e.g., a BS, a baseband chip, a terminal, a terminal chip, a DU or a CU), execute programs, and process data of the programs. The communication device 8100 is used to implement any of the above methods.

In some embodiments, the communication device 8100 further includes one or more memories 8102 for storing instructions. In an implementation, all or part of the memories 8102 may be external to the communication device 8100.

In some embodiments, the communication device 8100 includes one or more transceivers 8103. In this case, the transceiver 8103 performs at least one of the communication steps, such as transmission and/or reception in the above method (e.g., step S2101, step S2102, step S2103, step S2105, step S2106 and step S2107, which are not limited here), and the processor 8101 is configured to perform at least one of other steps (e.g., step S2104, which is not limited herein).

In some embodiments, the transceiver may include a receiver and/or a transmitter. The receiver and the transmitter may be separated or integrated together. In an implementation, terms "transceiver", "transceiver unit", "transceiver machine" and "transceiver circuit" are interchangeable, and terms "transmitter", "transmitting unit", "transmitter machine" and "transmitting circuit" are also interchangeable. In addition, terms "receiver", "receiving unit", "receiver machine" and "receiving circuit" are interchangeable.

In some embodiments, the communication device 8100 further includes one or more interface circuits 8104. In an implementation, the interface circuit 8104 is connected with the memory 8102, and it is used to receive signals from the memory 8102 or other devices and send signals to the memory 8102 or other devices. For example, the interface circuit 8104 may read the instructions stored in the memory 8102 and send the instructions to the processor 8101.

The communication device 8100 described in the above embodiments may be a network device or a terminal. However, the scope of the communication device 8100 is not limited in the present disclosure, and the structure of the communication device 8100 is not limited by FIG. 8A. The communication device may be a standalone device or part of a larger device. For example, the communication device may be: (1) a standalone integrated circuit (IC), a chip, a chip system or a sub-system; (2) a collection of one or more ICs (In an implementation, the collection includes storage components for storing data and programs); (3) an ASIC, such as a modem; (4) a module that can be embedded in other devices; (5) a receiver, a terminal, a smart terminal, a cellular phone, a wireless device, a handheld device, a mobile unit, an in-vehicle device, a network device, a cloud device, an AI device, etc.; or (6) others.

FIG. 8B is a schematic structural diagram of a chip 8200 provided by an embodiment of the present disclosure. For a case that the communication device 8100 is a chip or a chip system, reference may be made to the schematic structural diagram of the chip 8200 shown in FIG. 8B, which is not limited here.

The chip 8200 includes one or more processors 8201, and is used to perform any of the above methods.

In some embodiments, the chip 8200 includes one or more interface circuits 8202. In an implementation, the interface circuit 8202 is connected to a memory 8203, and it is configured to receive signals from the memory 8203 or other devices and send signals to the memory 8203 or other devices. For example, the interface circuit 8202 may read instructions stored in the memory 8203 and send the instructions to the processor 8201.

In some embodiments, the interface circuit 8202 performs at least one of the communication steps such as transmission and/or reception in the above method (e.g., step S2101, step S2102, step S2103, step S2105, step S2106 and step S2107, which are not limited herein), and the processor 8201 performs at least one of other steps (e.g., step S2104, which is not limited herein).

In some embodiments, terms "interface circuit", "interface", "transceiver pin" and "transceiver" are interchangeable.

In some embodiments, the chip 8200 further includes one or more memories 8203 for storing instructions. In an implementation, all or part of the memories 8203 are external to the chip 8200.

The present disclosure also provides a storage medium. The storage medium stores instructions, and when the instructions are executed by the communication device 8100, the communication device 8100 is caused to implement any of the above methods. In an implementation, the storage medium is an electronic storage medium. In an implementation, the storage medium may be a computer-readable storage medium or a storage medium readable by other devices, which is not limited herein. In an implementation, the storage medium may be a non-transitory storage medium or a transitory storage medium, which is not limited herein.

The present disclosure also provides a program product. When the program product is executed by the communication device 8100, the communication device 8100 is caused to implement any of the above methods. In an implementation, the program product is a computer program product.

The present disclosure also provides a computer program. When the computer program is executed by a computer, the computer is caused to implement any of the above methods.

## Claims

1. An information processing method, performed by a first device, comprising:
sending first information, wherein the first information is used to request an Internet of Things device to send second information; and
receiving the second information, wherein the second information indicates information of the Internet of Things device.

2. The method of claim 1, wherein the first information comprises at least one of:
an Internet of Things device identifier used to identify the Internet of Things device; or
an Internet of Things device group identifier used to identify an Internet of Things device group in which the Internet of Things device is located.

3. The method of claim 2, wherein the Internet of Things device identifier and/or the Internet of Things device group identifier is configured by the first device for the Internet of Things device.

4. The method of any one of claims 1-3, wherein the first information comprises an authentication code used for the Internet of Things device to authenticate the first device; and
the second information is sent in response to the Internet of Things device determining that the authentication is passed according to the authentication code.

5. The method of claim 4, wherein
a first authentication code sent by the first device to the Internet of Things device is different from a second authentication code sent by a second device to the Internet of Things device; or
a third authentication code sent by the first device to a first Internet of Things device is different from a fourth authentication code sent by the first device to a second Internet of Things device.

6. The method of any one of claims 1-5, wherein the first information comprises scheduling request information used to request the Internet of Things device to send the second information; and
the second information is sent by the Internet of Things device in response to the scheduling request information.

7. The method of any one of claims 1-6, wherein the first information comprises scheduling indication information indicating a data type comprised in the second information; and
the second information is determined by the Internet of Things device according to the scheduling indication information.

8. The method of any one of claims 1-7, wherein the second information comprises at least one of:
sensor data detected by the Internet of Things device; or
coding information of the Internet of Things device, wherein the coding information comprises at least one code domain.

9. The method of any one of claims 1-8, wherein before receiving the second information, the method comprises:
receiving third information, wherein the third information comprises at least one of:
first feedback information indicating whether the Internet of Things device allows the first device to read data information;
second feedback information used to request the first device for power supply; or
third feedback information indicating an offset of sending the second information to the first device.

10. The method of claim 9, wherein receiving the second information comprises:
determining that a first condition is satisfied; and
receiving the second information, wherein the first condition comprises at least one of:
the first device receiving the first feedback information, and the first feedback information indicating that the Internet of Things device allows the first device to read the data information;
the first device receiving the second feedback information, and a transmission of a charging signal reaching a first duration; or
the first device receiving the third feedback information, and a waiting time reaching the offset.

11. The method of claim 10, wherein the first duration is determined according to the offset, or the first duration is predefined by a protocol.

12. The method of claim 6, further comprising:
receiving fourth information, wherein the fourth information indicates a first data type, and the first data type is a data type supported by the Internet of Things device; and
determining scheduling indication information, wherein a data type indicated by the scheduling indication information is at least one data type comprised in the first data type.

13. The method of claim 6, further comprising:
receiving fourth information, wherein the fourth information indicates a first data type, and the first data type is a data type supported by the Internet of Things device;
sending fifth information, wherein the fifth information is used to configure a data type of the Internet of Things device as a second data type, and the second data type comprises at least one data type comprised in the first data type; and
determining scheduling indication information, wherein a data type indicated by the scheduling indication information is at least one data type comprised in the second data type.

14. The method of claim 6, further comprising:
sending sixth information, wherein the sixth information is used to configure a data type of the Internet of Things device as a third data type; and
determining scheduling indication information, wherein a data type indicated by the scheduling indication information is at least one data type comprised in the third data type.

15. The method of any one of claims 1-13, wherein the first device comprises at least one of:
an access network device, a core network device, a terminal, a radio frequency read-write device, an intermediate node or an assisting node.

16. An information processing method, performed by an Internet of Things device, comprising:
receiving first information sent by a first device, wherein the first information is used to request the Internet of Things device to send second information; and
sending the second information, wherein the second information indicates information of the Internet of Things device.

17. The method of claim 15, wherein the first information comprises at least one of:
an Internet of Things device identifier used to identify the Internet of Things device; or
an Internet of Things device group identifier used to identify an Internet of Things device group in which the Internet of Things device is located.

18. The method of claim 17, wherein the Internet of Things device identifier and/or the Internet of Things device group identifier is configured by the first device for the Internet of Things device.

19. The method of any one of claims 16-18, wherein the first information comprises an authentication code used for the Internet of Things device to authenticate the first device; and
the second information is sent in response to the Internet of Things device determining that the authentication is passed according to the authentication code.

20. The method of claim 19, wherein a first authentication code received by the Internet of Things device from the first device is different from a second authentication code received by the Internet of Things device from a second device; or
the Internet of Things device is a first Internet of Things device, a third authentication code received by the first Internet of Things device from the first device is different from a fourth authentication code received by a second Internet of Things device from the first device.

21. The method of any one of claims 16-20, wherein the first information comprises scheduling request information used to request the Internet of Things device to send the second information; and
the second information is sent by the Internet of Things device in response to the scheduling request information.

22. The method of any one of claims 16-21, wherein the first information comprises scheduling indication information indicating a data type comprised in the second information; and
the second information is determined by the Internet of Things device according to the scheduling indication information.

23. The method of any one of claims 16-22, wherein the second information comprises at least one of:
sensor data detected by the Internet of Things device; or
coding information of the Internet of Things device, wherein the coding information comprises at least one code domain.

24. The method of any one of claims 16-23, wherein before sending the second information, the method comprises:
sending third information, wherein the third information comprises at least one of:
first feedback information indicating whether the Internet of Things device allows the first device to read data information;
second feedback information used to request the first device for power supply; or
third feedback information indicating an offset of sending the second information to the first device.

25. The method of claim 24, wherein sending the second information comprises:
determining that a second condition is satisfied; and
sending the second information, wherein the second condition comprises at least one of:
the Internet of Things device having sent the first feedback information, and the first feedback information indicating that the Internet of Things device allows the first device to read the data information;
the Internet of Things device having sent the second feedback information and receiving a charging signal; or
the Internet of Things device having sent the third feedback information.

26. The method of claim 22, further comprising:
sending fourth information, wherein the fourth information indicates a first data type, the first data type is a data type supported by the Internet of Things device, and
the data type indicated by the scheduling indication information is at least one data type comprised in the first data type.

27. The method of claim 22, further comprising:
sending fourth information, wherein the fourth information indicates a first data type, and the first data type is a data type supported by the Internet of Things device; and
receiving fifth information, wherein the fifth information is used to configure a data type of the Internet of Things device as a second data type, the second data type comprises at least one data type comprised in the first data type, and
the data type indicated by the scheduling indication information is at least one data type comprised in the second data type.

28. The method of claim 22, further comprising:
receiving sixth information, wherein the sixth information is used to configure a data type of the Internet of Things device as a third data type, and
the data type indicated by the scheduling indication information is at least one data type comprised in the third data type.

29. The method of any one of claims 16-28, wherein the first device comprises at least one of:
an access network device, a core network device, a terminal, a radio frequency read-write device, an intermediate node or an assisting node.

30. A first device, comprising:
a transceiver module, configured to send first information, wherein the first information is used to request an Internet of Things device to send second information; and
the transceiver module being further configured to receive the second information, wherein the second information indicates information of the Internet of Things device.

31. An Internet of Things device, comprising:
a transceiver module, configured to receive first information sent by a first device, wherein the first information is used to request the Internet of Things device to send second information; and
the transceiver module being further configured to send the second information, wherein the second information indicates information of the Internet of Things device.

32. A first device, comprising:
one or more processors; and
a memory coupled to the one or more processors, wherein the memory stores executable instructions, and when the executable instructions are executed by the one or more processors, the first device is caused to perform the information processing method of any one of claims 1-15.

33. An Internet of Things device, comprising:
one or more processors; and
a memory coupled to the one or more processors, wherein the memory stores executable instructions, and when the executable instructions are executed by the one or more processors, the Internet of Things device is caused to perform the information processing method of any one of claims 16-29.

34. A communication system, comprising a first device and an Internet of Things device, wherein the first device is configured to implement the information processing method of any one of claims 1-15, and the Internet of Things device is configured to implement the information processing method of any one of claims 16-29.

35. A storage medium storing instructions that, when run on a communication device, cause the communication device to perform the information processing method of any one of claims 1-15 or the information processing method of any one of claims 16-29.
